# EUROPEAN PATENT APPLICATION

(11) **EP 4 599 989 A1**
(43) Date of publication of application: **13.08.2025**
(21) Application number: 25156973.7
(22) Date of filing: 10.02.2025
(51) Int. Cl.: B25F 5/00

(54) **AUXILIARY WIRELESS DEVICE FOR POWER TOOL**

(30) Priority: 12.02.2024 US 202463552654 P; 24.01.2025 US 202519037003
(71) Applicant: Black & Decker, Inc., New Britain, CT 06053 (US)
(72) Inventor: FRIEDMAN, Brian E., New Britain, 06053 (US); VARIPATIS, Michael, New Britain, 06053 (US)
(74) Representative: SBD IPAdmin

(57) **Abstract**

Certain embodiments provide an auxiliary wireless device for a power tool that includes a body, a wireless communication unit (WCU), an inertial measurement unit (IMU), and a controller. The body is removably attachable to a housing of a power tool. The WCU includes a wireless transceiver. The IMU is configured to output IMU sensor data including at least one of 3-axis acceleration data and 3-axis angular rate data. The controller is configured to determine a loaded operational time of the power tool over a time period based on the IMU sensor data, determine a cumulative loaded operational time of the power tool over a cumulative time period based on loaded operational times for a number of time periods, and send the cumulative loaded operational time to the WCU for transmission to a remote device. The power tool is activated in a loaded condition during the loaded operational time.

## Description

The present disclosure and invention relate to power tools, and particularly to an auxiliary wireless device for a power tool.

According to an aspect of the invention, an auxiliary wireless device for a power tool is provided that includes a body, a wireless communication unit (WCU), an inertial measurement unit (IMU), and a controller in communication with the WCU and the IMU. The body is removably attachable to a housing of a power tool. The WCU is supported by the body, and includes a wireless transceiver. The IMU is supported by the body, and is configured to output IMU sensor data including at least one of 3-axis acceleration data and 3-axis angular rate data. The controller is configured to determine a loaded operational time of the power tool over a time period based on the IMU sensor data, determine a cumulative loaded operational time of the power tool over a cumulative time period based on loaded operational times for a number of time periods, and send the cumulative loaded operational time to the WCU for transmission to a remote device. The power tool is activated in a loaded condition during the loaded operational time.

According to another aspect of the invention, an auxiliary wireless device for a power tool is provided that includes a body, a wireless communication unit (WCU), an inertial measurement unit (IMU), and a controller in communication with the WCU and the IMU. The body is removably attachable to a housing of a power tool. The WCU is supported by the body, and includes a wireless transceiver. The IMU is supported by the body, and is configured to output IMU sensor data including at least one of 3-axis acceleration data and 3-axis angular rate data. The controller is configured to execute a machine learning (ML) model to determine a cumulative loaded operational time of the power tool over a cumulative time period based on loaded operational times for a number of time periods, and send the cumulative loaded operational time to the WCU for transmission to a remote device. The power tool is activated in a loaded condition during the loaded operational time.

According to another aspect of the invention, an auxiliary wireless device for a power tool is provided that includes a body, a wireless communication unit (WCU), an inertial measurement unit (IMU), and a controller in communication with the WCU and the IMU. The body is removably attachable to a housing of a power tool. The WCU is supported by the body, and includes a wireless transceiver. The IMU is supported by the body, and is configured to output IMU sensor data including at least one of 3-axis acceleration data and 3-axis angular rate data. The controller is configured to determine, based on the IMU sensor data over a time period, an operation parameter of the power tool, the operation parameter including at least one of a type of power tool, a type of operation being performed by the power tool, and a type of accessory mounted to the power tool, and send the operation parameter to the WCU for transmission to a remote device.

Further aspects and embodiments of the invention and/or the disclosure are described and defined in the following numbered clauses:
1. An auxiliary wireless device, comprising:
   a body removably attachable to a housing of a power tool;
   a wireless communication unit (WCU), supported by the body, the WCU including a wireless transceiver;
   an inertial measurement unit (IMU), supported by the body, the IMU configured to output IMU sensor data including at least one of 3-axis acceleration data and 3-axis angular rate data; and
   a controller, in communication with the WCU and the IMU, the controller configured to: determine a loaded operational time of the power tool over a time period based on the IMU sensor data, determine a cumulative loaded operational time of the power tool based on loaded operational times within a cumulative time period, and send the cumulative loaded operational time to the WCU for transmission to a remote device;
   wherein the power tool is activated in a loaded condition during the loaded operational time.
2. The auxiliary wireless device of clause 1, wherein determine the loaded operational time includes:
   determine, based on the 3-axis acceleration data, a peak absolute acceleration (PAA) for each axis over the time period;
   compare the PAA for each axis to a first acceleration threshold; and
   set the loaded operational time of the power tool to the time period when the PAA for at least two axes are greater than the first acceleration threshold.
3. The auxiliary wireless device of clause 2, wherein:
   the controller is further configured to:
   determine an unloaded operational time of the power tool over the time period, including: compare the PAA for each axis to a second acceleration threshold that is less than the first acceleration threshold, and set an unloaded operational time of the power tool to the time period when the PAA for at least two axes are less than the first acceleration threshold and greater than the second acceleration threshold;
   determine a cumulative unloaded operational time of the power tool based on unloaded operational times within the cumulative time period; and
   send the cumulative unloaded operational time to the WCU for transmission to the remote device; and wherein the power tool is activated in an unloaded condition during the unloaded operational time.
4. The auxiliary wireless device of clause 3, wherein:
   the controller is further configured to:
   determine a non-operating movement time of the power tool over the time period, including: compare the PAA for each axis to a third acceleration threshold that is less than the second acceleration threshold, and set a movement time of the power tool to the time period when the PAA for at least one axis is less than the second acceleration threshold and greater than the third acceleration threshold, determine a cumulative non-operating movement time of the power tool based on non-operating movement times within the cumulative time period, and send the cumulative non-operating movement time to the WCU for transmission to the remote device;
   and wherein the power tool is not activated or is activated in the unloaded condition during the non-operating movement times.
5. The auxiliary wireless device of clause 4, wherein:
   the controller is further configured to:
   determine a rest time of the power tool over the time period, including set a rest time of the power tool to the time period when the PAA for each axis are less than the third acceleration threshold; determine a cumulative rest time of the power tool based on rest times within the cumulative time period; and
   send the cumulative rest time to the WCU for transmission to the remote device;
   and wherein the power tool is not activated during the rest times.
6. The auxiliary wireless device of any preceding clause, wherein:
   determine the loaded operational time of the power tool includes: determine, based on 3-axis angular rate data, a peak absolute angular rate (PAAR) for each axis over the time period, compare the PAAR for each axis to an angular rate threshold, and set the loaded operational time of the power tool to the time period when the PAAR for at least one axis is greater than the angular rate threshold and the 3-axis angular rate data for at least one axis is sinusoidal with an angular rate frequency; and
   wherein the angular rate frequency is related to user-induced movement of the power tool.
7. The auxiliary wireless device of clause 6, wherein:
   the controller is further configured to:
   determine an unloaded operational time of the power tool over the time period, including: set an unloaded operational time of the power tool to the time period when the PAAR for at least one axis is greater than the angular rate threshold and the 3-axis angular rate data for at least one axis is sinusoidal with a second angular rate frequency, determine a cumulative unloaded operational time of the power tool based on unloaded operational times within the cumulative time period, send the cumulative unloaded operational time to the WCU for transmission to the remote device; and
   wherein the power tool is activated in an unloaded condition during the unloaded operational time, and the second angular rate frequency is related to a speed of the power tool.
8. The auxiliary wireless device of any preceding clause, wherein the controller is further configured to: store, in a memory, the IMU sensor data as timestamped IMU sensor data; and send the timestamped IMU sensor data to the WCU for communication over a wireless communication link.
9. The auxiliary wireless device of clause 8, wherein the controller is further configured to:
   determine, based on the timestamped IMU sensor data, at least one timestamped tool operational event including at least one of a total operational time, a high loaded operational time, a low loaded operational time, a trigger press time, a trigger release time, and an idle time; and send the timestamped tool operational events to the WCU for transmission to the remote device.
10. The auxiliary wireless device of any preceding clause, wherein the power tool is a drill, a driver, an impact driver, an impact wrench, a grinder, a miter saw, or a rotary hammer.
11. An auxiliary wireless device, comprising:
   a body removably attachable to a housing of a power tool;
   a wireless communication unit (WCU), supported by the body, the WCU including a wireless transceiver;
   an inertial measurement unit (IMU), supported by the body, the IMU configured to output IMU sensor data including at least one of 3-axis acceleration data and 3-axis angular rate data; and a controller, in communication with the WCU and the IMU, the controller configured to execute a machine learning (ML) model to determine a loaded operational time of the power tool over a time period based on the IMU sensor data, determine a cumulative loaded operational time of the power tool based on loaded operational times within a cumulative time period, and send the cumulative loaded operational time to the WCU for transmission to a remote device;
   wherein the power tool is activated in a loaded condition during the loaded operational time.
12. The auxiliary wireless device of clause 11, wherein the ML model is trained to determine the loaded operational time of the power tool based on historical IMU sensor data that include one or more power tools operating in the loaded condition.
13. The auxiliary wireless device of clause 12, wherein the ML model is trained to determine an unloaded operational time of the power tool based on historical IMU sensor data that include one or more power tools operating in an unloaded condition; and
   the controller is further configured to execute the ML model to determine an unloaded operational time of the power tool over the time period based on the IMU sensor data, determine a cumulative unloaded operational time of the power tool based on unloaded operational times within the cumulative time period, and send the cumulative unloaded operational time to the WCU for transmission to the remote device;
   wherein the power tool is activated in the unloaded condition during the unloaded operational time.
14. The auxiliary wireless device of clause 13, wherein the ML model is trained to determine a movement time of the power tool based on historical IMU sensor data that include one or more power tools that are not activated or activated in the unloaded condition; and
   the controller is further configured to execute the ML model to determine a non-operating movement time of the power tool over the time period based on the IMU sensor data, determine a cumulative non-operating movement time of the power tool based on non-operating movement times within the cumulative time period, and send the cumulative non-operating movement time to the WCU for transmission to the remote device;
   wherein the power tool is not activated or is activated in the unloaded condition during the non-operating movement time.
15. The auxiliary wireless device of clause 14, wherein:
   the ML model is trained to determine a rest time of the power tool based on the historical IMU sensor data that include one or more power tools that are not activated; and the controller is further configured to execute the ML model to determine a rest time of the power tool over the time period based on the IMU sensor data, determine a cumulative rest time of the power tool based on rest times within the cumulative time period, and send the cumulative rest time to the WCU for transmission to the remote device;
   wherein the power tool is not activated during the rest time.
16. An auxiliary wireless device, comprising:
   a body removably attachable to a housing of a power tool;
   a wireless communication unit (WCU), supported by the body, the WCU including a wireless transceiver;
   an inertial measurement unit (IMU), supported by the body, the IMU configured to output IMU sensor data including at least one of 3-axis acceleration data and 3-axis angular rate data; and
   a controller, in communication with the WCU and the IMU, the controller configured to determine, based on the IMU sensor data over a time period, an operation parameter of the power tool, the operation parameter including at least one of a type of power tool, a type of operation being performed by the power tool, and a type of output accessory mounted to the power tool, and send the operation parameter to the WCU for transmission to a remote device.
17. The auxiliary wireless device of clause 16, wherein the IMU sensor data includes at least one of:
   3-axis acceleration data when the power tool is activated in a loaded condition;
   3-axis angular rate data when the power tool is activated in the loaded condition;
   3-axis acceleration data when the power tool is activated in an unloaded condition; and
   3-axis angular rate data when the power tool is activated in the unloaded condition.
18. The auxiliary wireless device of clause 16 or clause 17, wherein the type of power tool includes at least one of a drill, a driver, an impact driver, an impact wrench, a grinder, a miter saw, and a rotary hammer.
19. The auxiliary wireless device of clause 16 or any clause dependent thereon, wherein the type of operation includes at least one of drilling, driving, impact driving, heavy grinding, light grinding, polishing, removing material, and cutting.
20. The auxiliary wireless device of clause 16 or any clause dependent thereon, wherein the type of output accessory includes at least one of a drill bit, a driver bit, a socket, a grinding wheel, a cutting wheel, and a circular saw blade.
21. The auxiliary wireless device of clause 16 or any clause dependent thereon, wherein the controller is configured to determine the type of power tool by:
   determining a peak absolute value for each axis of the 3-axis acceleration data;
   comparing the peak absolute value for each axis of the 3-axis acceleration data to an acceleration threshold;
   processing the 3-axis angular rate data to determine a frequency of at least one sinusoidal waveform;
   comparing the frequency to an unloaded output shaft speed; and
   determining the type of power tool based on the comparison of the peak absolute values to the acceleration threshold and the comparison of the frequency to the unloaded output shaft speed.
22. The auxiliary wireless device of clause 21, wherein:
   the acceleration threshold is between 2 g and 8 g;
   the unloaded output shaft speed is between 1,800 revolutions per minute (rpm) and 3,000 rpm; and
   the controller is configured to determine the type of power tool to be an impact wrench when the peak absolute value of at least two axes of the 3-axis acceleration data is greater than the acceleration threshold, and the frequency is between 30 Hz and 50 Hz.
23. The auxiliary wireless device of clause 21 or clause 22, wherein:
   the acceleration threshold is between 2 g and 6 g;
   the unloaded output shaft speed is between 7,200 rpm and 8,400 rpm; and
   the controller is configured to determine the type of power tool to be a grinder when the peak absolute value of at least two axes of the 3-axis acceleration data is greater than the acceleration threshold, and the frequency of a first sinusoidal waveform is between 120 Hz and 140 Hz.
24. The auxiliary wireless device of clause 23, wherein the controller is further configured to determine the type of power tool to be a grinder when the frequency of a second sinusoidal waveform is between 1 Hz and 5 Hz.
25. The auxiliary wireless device of clause 21 or any clause dependent thereon, wherein:
   the acceleration threshold is between 2 g and 6 g;
   the unloaded output shaft speed is between 21,000 rpm and 23,400 rpm; and
   the controller is configured to determine the type of power tool to be a miter saw when the peak absolute value of at least two axes of the 3-axis acceleration data is greater than the acceleration threshold, and the frequency is between 350 Hz and 390 Hz.
26. The auxiliary wireless device of clause 25, wherein the controller is further configured to determine the type of power tool to be a miter saw when one axis of the 3-axis angular rate data includes a waveform pattern that includes a positive spike and a negative spike over about a 1 second time period.

It is to be explicitly understood that any feature of any aspect or embodiment of the invention or the disclosure, including any preferred or other optional feature, may be a feature of any other aspect or embodiment of the invention or the disclosure, including a preferred or other optional feature.

Embodiments of the invention will now be described, by way of example, with reference to the accompanying figures, of which:
FIG. 1 depicts a perspective view of an example power tool with an example auxiliary wireless device, in accordance with embodiments of the present disclosure.
FIG. 2 depicts a perspective view of another example power with the example auxiliary wireless device, in accordance with embodiments of the present disclosure.
FIG. 3A depicts a perspective view of a further example power tool with the auxiliary wireless device, in accordance with embodiments of the present disclosure.
FIGS. 3B and 3C depict side views of the example power tool depicted in FIG. 3A in a first position and a second position (respectively), in accordance with embodiments of the present disclosure.
FIG. 4 depicts an example system for monitoring power tools, in accordance with embodiments of the present disclosure.
FIGS. 5A to 5F depict inertial measurement unit (IMU) sensor data plots for the example power tool depicted in FIG. 1, in accordance with embodiments of the present disclosure.
FIGS. 6A to 6J depict IMU sensor data plots for the example power tool depicted in FIG. 2, in accordance with embodiments of the present disclosure.
FIGS. 7A to 7G depict IMU sensor data plots for the example power tool depicted in FIG. 3, in accordance with embodiments of the present disclosure.
FIGS. 8A to 8D depict flow charts illustrating rules-based functionality associated with the example auxiliary wireless device for determining power tool operational information, in accordance with embodiments of the present disclosure.
FIGS. 9A to 9D depict flow charts illustrating ML-based functionality associated with the example auxiliary wireless device for determining power tool operational information, in accordance with embodiments of the present disclosure.
FIG. 9E depicts a flow chart illustrating functionality associated with training an ML model to predict power tool operational states or other information, in accordance with embodiments of the present disclosure.
FIG. 10 depicts a flow chart illustrating functionality associated with the example auxiliary wireless device for determining power tool operational parameters, in accordance with embodiments of the present disclosure.
FIG. 11 depicts a flow chart illustrating functionality associated with determining a type of tool, in accordance with embodiments of the present disclosure.
FIG. 12 depicts a flow chart illustrating functionality associated with determining a type of accessory, in accordance with embodiments of the present disclosure.
FIG. 13 depicts a flow chart illustrating functionality associated with determining a type of fault, in accordance with embodiments of the present disclosure.
FIG. 14 depicts an IMU sensor data plot capturing mounting the example auxiliary wireless device in a power tool, in accordance with embodiments of the present disclosure.

The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

Embodiments of the present disclosure advantageously provide an auxiliary wireless device for a power tool. The auxiliary device includes, *inter alia,* a controller, an inertial measurement unit (IMU), and a wireless communication unit (WCU). The controller is configured to determine, *inter alia,* power tool information associated with the power tool, such as an operational state, an operational time, and a cumulative operational time of the power tool based on IMU sensor data. In certain embodiments, the power tool information may also include one or more operational parameters of the power tool, such as the type of power tool, the type of operation being performed by the power tool, the type of accessory mounted to the power tool, etc.

In certain embodiments, the IMU sensor data may include 3-axis acceleration data and/or 3-axis angular rate data that are acquired when the power tool is operating in various operational states, such as activated in a loaded condition (or a loaded operational state), activated in an unloaded condition (or an unloaded operational state), not activated while the power tool is moving (or a non-operating movement state), and not activated while the power tool is not moving (or a rest state).

The power tool may be any type of cordless or corded, handheld or stationary power tool, including but not limited to, drill/drivers, hammer drills, impact drivers, wrenches, die grinders, straight grinders, polishers, routers, planers, circular saws, reciprocating saws, rotary hammers, etc. The type of operation being performed by the power tool may include drilling, driving, impact driving, heavy grinding, light grinding, polishing, removing material, cutting, etc. The type of accessory mounted to the power tool may include a drill bit, a driver bit, a socket, a grinding wheel, a cutting wheel, a circular saw blade, etc.

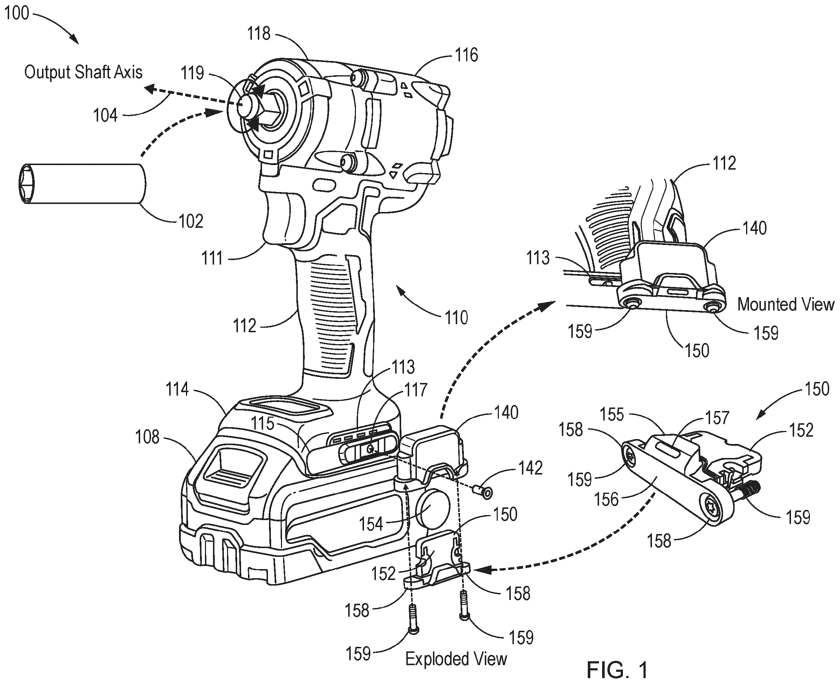

FIG. 1 depicts a perspective view of an example power tool with an auxiliary wireless device, in accordance with embodiments of the present disclosure.

In the embodiment depicted in FIG. 1, power tool 100 is a cordless impact wrench. Power tool 100 may include, *inter alia,* removable battery pack 108, housing 110, transmission assembly 118 mounted to housing 110, and auxiliary wireless device 150 mounted to housing 110.

Housing 110 forms handle portion 112, battery receptacle 114, and motor case 116. Handle portion 112 includes trigger 111. Battery receptacle 114 is formed on the lower end of handle portion 112, and motor case 116 is formed on the upper end of handle portion 112.

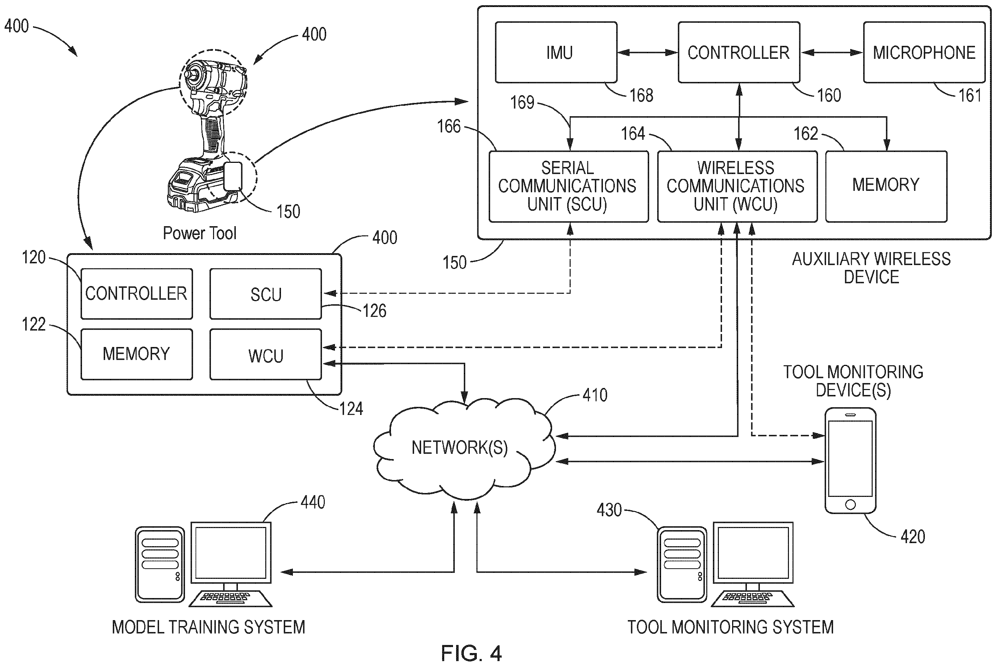

Trigger 111 is configured to activate and deactivate power tool 100 in cooperation with control electronics (such as controller 120 depicted in FIG. 4) which controls the supply of electric power from battery pack 108 to the electric motor (high speed, not visible) housed in motor case 116.

Battery receptacle 114 is configured to removably receive battery pack 108, such as a 20V max lithium-ion power tool battery pack, etc. Battery receptacle 114 may include two side walls (side wall 115 is depicted in FIG. 1), and each side wall includes a lower rail that is configured to engage an upper channel of battery pack 108. More particularly, the lower rails of the side walls are configured to slidingly engage with, and guide, the upper channels of battery pack 108 into a locked position with power tool 100. Battery pack 108 may be unlocked and removed from battery receptacle 114 (or remain in the locked position) as needed for recharging.

Side wall 115 also includes cooling air slots 113 and threaded opening 117. Cooling air slots 113 are configured to receive incoming cooling air into housing 110. In certain embodiments, threaded opening 117 may be disposed within a raised portion of side wall 115 (as depicted in FIG. 1).

Transmission assembly 118 is mounted on housing 110 forward of motor case 116, and includes, *inter alia,* a planetary gear set (not visible) coupled to the drive shaft of the electric motor, an impactor assembly (not visible) coupled to the planetary gear set, and anvil assembly 119 coupled to the impactor assembly. Anvil assembly 119 is the output shaft for power tool 100, which rotates about output shaft axis 104 when trigger 111 is activated.

The impactor assembly initially provides a continuous torque (via continuous rotation) to anvil assembly 119 and the load until a torque threshold is reached, and then provides a dynamic torque (via periodic rotational impacts) to anvil assembly 119 and the load when a higher torque is required. In certain embodiments, the impactor assembly may include a spring-loaded, cam-operated hammer that cooperates with anvil assembly 119 to deliver the continuous torque or the dynamic torque to the load. The hammer includes a hammer body with two or more hammer heads, and anvil assembly 119 includes an anvil body with two or more anvil dogs. The hammer body surrounds the anvil body, and the hammer heads and the anvil dogs are configured to engage to provide continuous torque, and to periodically engage and disengage to provide dynamic torque.

When trigger 111 is deactivated, a pre-compressed coil spring forces the hammer heads to engage the anvil dogs. When trigger 111 is initially activated, the hammer heads remain engaged to the anvil dogs, and anvil assembly 119 continuously rotates about output shaft axis 104 until the torque threshold is reached. The hammer body then follows the cam path and moves away from the anvil body, which further compresses the coil-spring and disengages the hammer heads from the anvil dogs. After the hammer heads are fully disengaged from the anvil dogs, the coil spring forces the hammer body to accelerate and move along the cam path toward the anvil body, which causes the hammer heads to impact the anvil dogs, thereby providing a dynamic torque to the load. The properties of the spring (such as spring rate or stiffness, etc.), the cam path, the mass of the hammer, the number of heads on the hammer body, the number of dogs on the anvil body, etc., determine the dynamic torque that is applied.

Output accessory 102, such as an impact socket, a deep impact socket, etc., may be removably attached to anvil assembly 119.

Auxiliary housing 140 and auxiliary wireless device 150 are depicted in an exploded perspective view and a mounted perspective view in FIG. 1.

Auxiliary housing 140 defines a cavity configured to receive auxiliary wireless device 150, and includes a through-hole and two screw bosses. Auxiliary housing 140 is mounted to side wall 115 of battery receptacle 114 by aligning fastener 142 in the through-hole and then securing fastener 142 into threaded opening 117. Other configurations of auxiliary housing 140, mounting locations, and fasteners are also supported.

Auxiliary wireless device 150 includes body 152 with front surface 156, an upper surface, a lower surface (not visible), a rear surface (not visible), and projection 155 extending from front surface 156 and the upper surface. Generally, body 152 houses a circuit board containing various electronic components, as discussed below with respect to FIG. 4. The lower surface removably receives energy storage unit 154, such as a coin cell battery, etc., and front surface 156 includes through-holes 158 that are configured to receive fasteners 159 for securing auxiliary wireless device 150 to auxiliary housing 140. Projection 155 includes LED indicator light 157 that may indicate, *inter alia,* when data is being acquired, when data is being transmitted, etc.

Auxiliary wireless device 150 is mounted within auxiliary housing 140 by aligning fasteners 159 in through-holes 158 and securing fasteners 159 into the screw bosses of auxiliary housing 140.

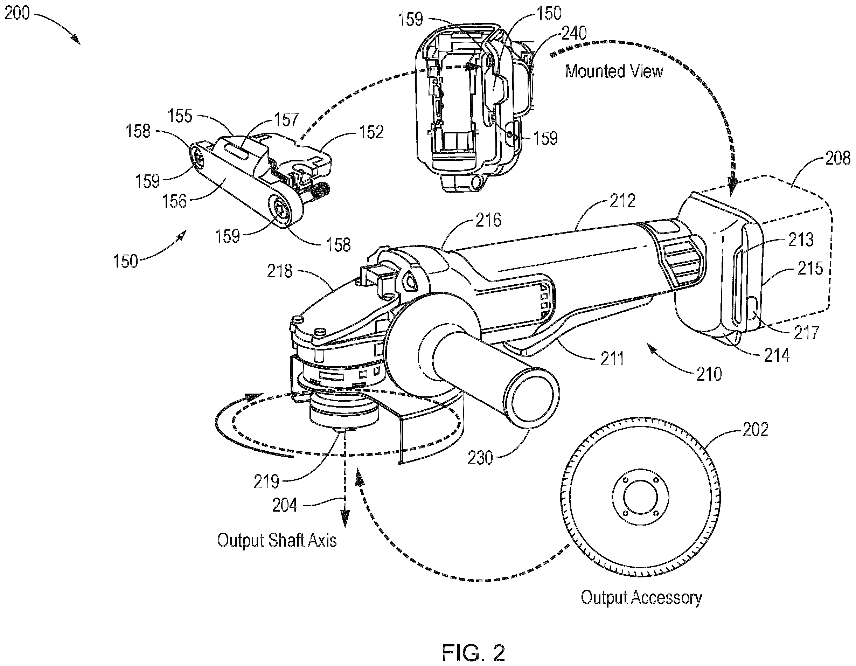

FIG. 2 depicts a perspective view of an example power tool with an auxiliary wireless device, in accordance with embodiments of the present disclosure.

In the embodiment depicted in FIG. 2, power tool 200 is a cordless angle grinder. Power tool 200 may include, *inter alia,* removable battery pack 208, housing 210, gearcase assembly 218 mounted to housing 210, and auxiliary wireless device 150 mounted within housing 210. Side handle 230 may be attached to a left side mount on gearcase assembly 218 (as depicted in FIG. 2) or a right side mount on gearcase assembly 218.

Housing 210 forms handle portion 212, battery receptacle 214, and motor case 216. Handle portion 212 includes paddle trigger 211. Battery receptacle 214 is formed on the lower end of handle portion 212, and motor case 216 is formed on the upper end of handle portion 212.

Paddle trigger 211 is configured to activate and deactivate power tool 200 in cooperation with control electronics (such as controller 120 depicted in FIG. 4) which controls the supply of electric power from battery pack 208 to the electric motor (high speed, not visible) housed in motor case 216.

Battery receptacle 214 is configured to removably receive battery pack 208, such as a 20V max lithium-ion power tool battery pack, etc. Battery receptacle 214 may include two side walls (side wall 215 is depicted in FIG. 2), and each side wall includes a lower rail that is configured to engage an upper channel of battery pack 208. More particularly, the lower rails of the side walls are configured to slidingly engage with, and guide, the upper channels of battery pack 208 into a locked position with power tool 200. Battery pack 208 may be unlocked and removed from battery receptacle 214 (or remain in the locked position) as needed for recharging.

Side wall 215 also includes cooling air slots 213 and threaded opening 217. Cooling air slots 213 are configured to receive incoming cooling air into housing 210. In certain embodiments, threaded opening 217 may be disposed within a raised portion of side wall 215 (as depicted in FIG. 2).

Gearcase assembly 218 is mounted on housing 210 forward of motor case 216, and includes, *inter alia,* a bevel gear (not visible) coupled to a pinion (bevel gear) on the drive shaft of the electric motor, and to output shaft 219. Output shaft 219 rotates about output shaft axis 204 when paddle trigger 211 is activated.

Output accessory 202, such as a grinding wheel, a cutting wheel, a polishing wheel, etc., may be removably attached to output shaft 219 using a clamp washer and flanged hex nut.

Auxiliary wireless device 150 is depicted in a mounted perspective view in FIG. 2.

In certain embodiments, auxiliary wireless device 150 may be mounted within pocket 240 of housing 210. Similar to auxiliary housing 140, pocket 240 defines a cavity configured to receive auxiliary wireless device 150, and includes two screw bosses or threaded openings. Auxiliary wireless device 150 is mounted within pocket 240 by securing fasteners 159 into the screw bosses or threaded openings of pocket 240. Other configurations of pocket 240, mounting locations, and fasteners are also supported. In other embodiments, auxiliary housing 140 may be mounted to side wall 215, as described above with respect to side wall 115, and auxiliary wireless device 150 may be mounted within auxiliary housing 140.

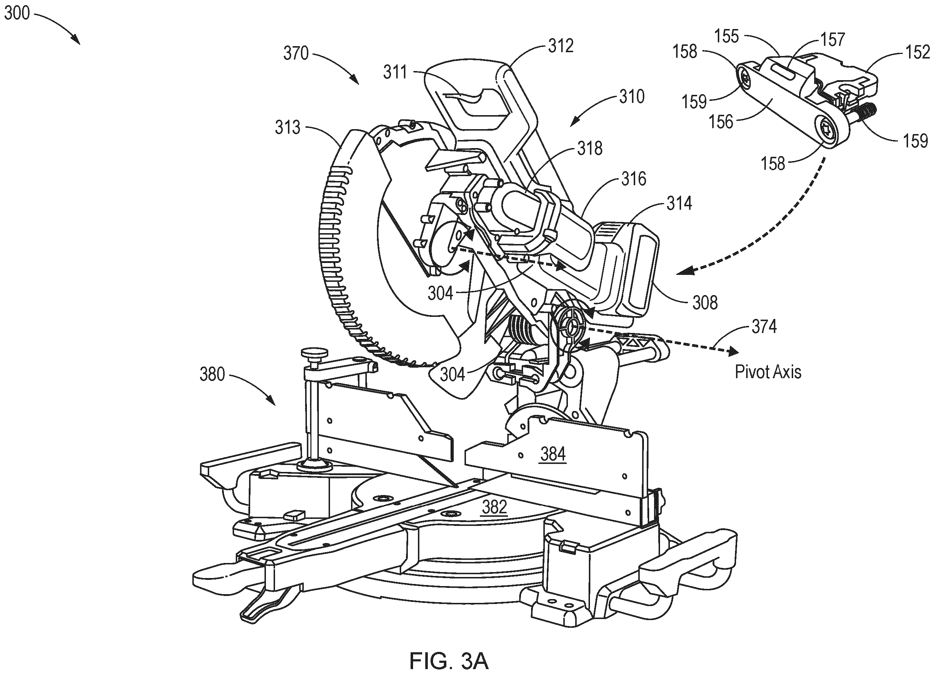

FIG. 3A depicts a perspective view of a further example power tool with an auxiliary wireless device, in accordance with embodiments of the present disclosure.

In the embodiment depicted in FIG. 3A, power tool 300 is a cordless miter saw. Power tool 300 may include, *inter alia,* miter saw 370 rotationally coupled to adjustable base 380 using counterbalanced hinge 372. Miter saw 370 includes, *inter alia,* removable battery pack 308, housing 310, movable blade guard 313, gearcase assembly 318 mounted to housing 310, and auxiliary wireless device 150 mounted within a pocket of housing 310 (such as pocket 240), within an auxiliary housing mounted to housing 310 (such as auxiliary housing 140). Other mounting configurations for auxiliary wireless device 150 are also supported.

Housing 310 forms handle portion 312, battery receptacle 314, and motor case 316. Handle portion 312 includes trigger 311. Battery receptacle 314 is formed on the lower end of handle portion 312, and motor case 316 is formed above battery receptacle 314.

Trigger 311 is configured to activate and deactivate power tool 300 in cooperation with control electronics (such as controller 120 depicted in FIG. 4) which controls the supply of electric power from battery pack 308 to the electric motor (high speed, not visible) housed in motor case 316.

Battery receptacle 314 is configured to removably receive battery pack 308, such as a 20V max lithium-ion power tool battery pack, etc. Battery receptacle 314 may include two side walls, and each side wall includes a lower rail that is configured to engage an upper channel of battery pack 308. More particularly, the lower rails of the side walls are configured to slidingly engage with, and guide, the upper channels of battery pack 308 into a locked position with power tool 300. Battery pack 308 may be unlocked and removed from battery receptacle 314 (or remain in the locked position) as needed for recharging.

The side walls also include cooling air slots and threaded openings. The cooling air slots are configured to receive incoming cooling air into housing 310. In certain embodiments, the threaded openings may be disposed within raised portions of the side walls.

Gearcase assembly 318 is mounted on housing 310 forward of motor case 316, and includes, *inter alia,* a bevel gear set (not visible) coupled to the drive shaft of the electric motor, and to a spindle (output shaft, not visible). The output shaft rotates about output shaft axis 304 when trigger 311 is activated.

Output accessory 302, such as a cutting blade, etc., may be removably attached to the output shaft using a clamp washer and a blade screw.

Auxiliary wireless device 150 is depicted in an unmounted perspective view in FIG. 3A.

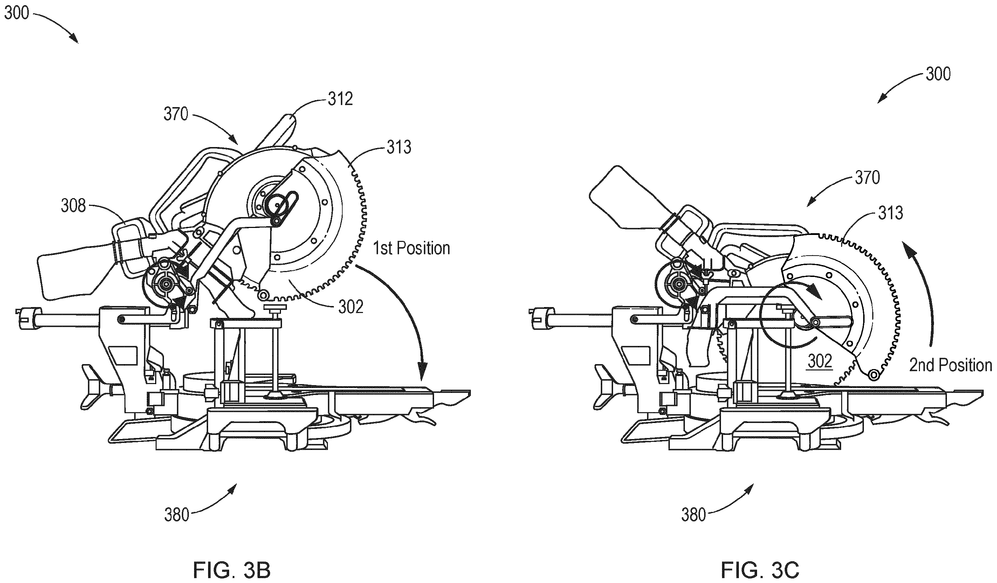

Miter saw 370 rotates about pivot axis 374 from a first position (FIGS. 3A, 3B) to a second position (FIG. 3C). Movable blade guard 313 moves up as the operator pulls handle portion 312 down to move miter saw 370 from the first position to the second position to engage a workpiece placed on table 382 and against fence 384 of adjustable base 380. Similarly, movable blade guard 313 moves up as the operator pulls handle portion 312 up to move miter saw 370 from the second position to the first position to disengage from the workpiece.

FIGS. 3B and 3C depict right side views of the example power tool depicted in FIG. 3A in the first position and the second position (respectively), in accordance with embodiments of the present disclosure.

Miter saw 370 and adjustable base 380, as well as output accessory (blade) 302, battery pack 308, handle portion 312, movable blade guard 313 are identified.

It should be understood that while power tools 100, 200, 300 are described by way of examples, the teachings of this disclosure are not limited to cordless impact wrenches, angle grinders, and miter saws. Rather, power tools 100, 200, 300 may be any type of cordless or corded, handheld or stationary power tool, including but not limited to, drill/drivers, hammer drills, impact drivers, wrenches, die grinders, straight grinders, polishers, routers, planers, circular saws, reciprocating saws, rotary hammers, etc. Further, while the embodiments above describe the wireless auxiliary device 150 being a discrete chip module that is removably mounted into a pocket of the power tool housing, other configurations and mounting locations of the wireless auxiliary device 150 are within the scope of this disclosure. For example, the wireless auxiliary device 150 may be configured as, or incorporated into, a tag device mountable on an outer surface of the housing of the power tool via an adhesive or fasteners. An example of such a tag device includes, but is not limited to, the DeWalt^{®} DCE041 Tool Connect^{™} Tag. In another example, the wireless auxiliary device 150 may be mountable onto an accessory of the power tool (e.g., the side handle 230 or blade guard 313), or integrally incorporated inside the accessory of the power tool (e.g., inside the cylindrical housing of the side handle 230). In another example, the wireless auxiliary device 150 may be mounted discretely on an outer surface of the battery pack 108, 208, 308, or provided integrally and internally within the battery pack 108, 208, 308. This configuration may enable the electronics and control circuitry of the battery pack to have access to the IMU sensor data of the wireless auxiliary device 150.

FIG. 4 depicts an example system for monitoring power tools, in accordance with embodiments of the present disclosure.

System 405 includes, *inter alia,* one or more power tools 400 (such as power tools 100, 200, 300), network(s) 410, tool monitoring device(s) 420 coupled to network 410, and tool monitoring system 430 coupled to network 410. In certain embodiments, system 405 also includes model training system 440 coupled to network 410.

Each power tool 400 includes an auxiliary wireless device 150 mounted within a pocket of the power tool housing (such as pocket 240) or within an auxiliary housing that is mounted to the power tool housing (such as auxiliary housing 140). As noted above, other mounting configurations for auxiliary wireless device 150 are also supported.

Each power tool 400 includes control electronics, such as controller 120 and memory 122. Controller 120 may be a microcontroller, a microprocessor, an application integrated circuit (ASIC), a field-programmable gate array (FPGA), etc. In certain embodiments, the control electronics may include one or more communications units, such as wireless communications unit (WCU) 124, serial communications unit (SCU) 126, etc.

WCU 124 may include a Bluetooth / Bluetooth Low Energy (BLE) integrated circuit (IC), module, system-on-chip (SoC), etc. that includes a processor, memory, a Bluetooth transceiver, etc., a WiFi module, etc. WCU 124 may be configured to be coupled to network 410, and in certain embodiments, WCU 124 may be configured to be directly coupled to auxiliary wireless device 150 (dashed line in FIG. 4). In certain embodiments, WCU 124 may receive information from auxiliary wireless device 150 via the advertising signals broadcast from WCU 164. In other words, a two-way communication link does not need to be established between WCU 124 and WCU 164 to receive data. SCU 126 may include a universal serial bus (USB) module, an RS-232 module, etc., and, in certain embodiments, SCU 126 may be configured to be directly coupled to auxiliary wireless device 150 when mounted within the power tool housing (dashed line in FIG. 4).

Auxiliary wireless device 150 includes, *inter alia,* controller 160 (such as a microcontroller, a microprocessor, etc.), memory 162, wireless communication unit (WCU) 164, inertial measurement unit (IMU) 168, and communications bus 169. In certain embodiments, controller 160, memory 162, and IMU 168 may be combined into a single module or SoC.

In certain embodiments, auxiliary wireless device 150 may also include audible vibration detector 161 (such as a microphone). Audible vibration data acquired by the audible vibration detector 161 (e.g., associated with a tool operation) can be processed along with the IMU data to detect the tool's operating cycles and conditions, tool type, abrasive type, operation type, etc. For example, the sound from a grinder cutting operation is different than the sound from a grinding operation. In certain embodiments, the audible vibration data may be processed in the time domain, and at least a portion of the audible time domain data may be compared to known audible time domain signatures to detect known events or aspects about a tool, such as the tool's operating cycles and conditions, tool type, abrasive type, operation type, etc. In certain other embodiments, the audible vibration data may be converted to the frequency domain, and the audible frequency domain data may be compared to known audible frequency domain signatures to detect known events or aspects about a tool, such as the tool's operating cycles and conditions, tool type, abrasive type, operation type, etc.

IMU 168 may include, *inter alia,* a 3-axis digital accelerometer, a 3-axis digital gyroscope, a microcontroller or microprocessor, a communications interface (I/F), etc. The 3-axis digital accelerometer measures linear acceleration in units of g (or mg) in three orthogonal axes, i.e., a 1^{st} axis (such as an X-axis), a 2^{nd} axis (such as a Y-axis), and a 3^{rd} axis (such as a Z-axis). The linear acceleration measurement range may be ± 1 g, ± 2 g, ..., ± 10 g, and so on. Similarly, the 3-axis digital gyroscope measures angular rate in units of degrees per second (degrees/sec) (or millidegrees per second, mdps) in the same three orthogonal axes. The angular rate measurement range may be ± 100 dps, ± 200 dps, ..., ± 1000 dps, etc.

Generally, IMU 168 outputs IMU sensor data, including at least one of the 3-axis acceleration data and the 3-axis angular rate data, at a particular output data rate, such as 100 Hz, 200 Hz, 400 Hz, 800 Hz, 1600 Hz, etc. In certain embodiments, IMU 168 outputs IMU sensor data that includes both 3-axis acceleration data and 3-axis angular rate data, while in other embodiments, IMU 168 outputs IMU sensor data that includes either 3-axis acceleration data or 3-axis angular rate data.

In certain embodiments, controller 160 may be directly coupled to IMU 168 using a serial communications interface, such as a serial peripheral interface (SPI), inter-integrated circuit (I²C) interface, etc. (as depicted in FIG. 4). In other embodiments, IMU 168 may be coupled to communications bus 169. IMU 168 outputs the IMU sensor data to controller 160 for further processing. Additionally, controller 160 or IMU 168 may provide the IMU sensor data to memory 162 for storage as timestamped data.

In certain embodiments, the IMU microcontroller may process the 3-axis acceleration data to determine a peak absolute acceleration (PAA) for each axis over a time period, such as 50 ms, 100 ms, 500 ms, 1 second, 3 seconds, etc., and output the PAA for each axis to controller 160. Similarly, the IMU microcontroller may process the 3-axis angular rate data to determine a peak absolute angular rate (PAAR) for each axis over the time period, and output the PAAR for each axis to controller 160. The IMU microcontroller may also determine other characteristics of the 3-axis acceleration data and the 3-axis angular rate data, such as a mean absolute acceleration, an average absolute acceleration, a mean absolute angular rate, an average absolute angular rate, etc.

In other embodiments, controller 160 may process the 3-axis acceleration data to determine the PAA for each axis over a time period, such as 50 ms, 100 ms, 500 ms, 1 second, 3 seconds, etc. Similarly, controller 160 may process the 3-axis angular rate data to determine the PAAR for each axis over the time period. Controller 160 may also determine other characteristics the 3-axis acceleration data (for each axis) and the 3-axis angular rate data, such as a mean absolute acceleration, an average absolute acceleration, a mean absolute angular rate, an average absolute angular rate, etc.

Additionally, the microcontroller of IMU 168 or controller 160 may also determine aggregate characteristics of the 3 axis acceleration data and the 3-axis angular rate data, such as an aggregate peak absolute acceleration (APAA) for all 3 axes, an aggregate peak absolute angular rate (APAAR) for all 3 axes, etc. For example, the APAA may be determined by summing the PAA for each axis, by calculating the square root of the sum of the squares of the PAA for each axis, etc. Similarly, the APAAR may be determined by summing the PAAR for each axis, by calculating the square root of the sum of the squares of the PAAR for each axis, etc.

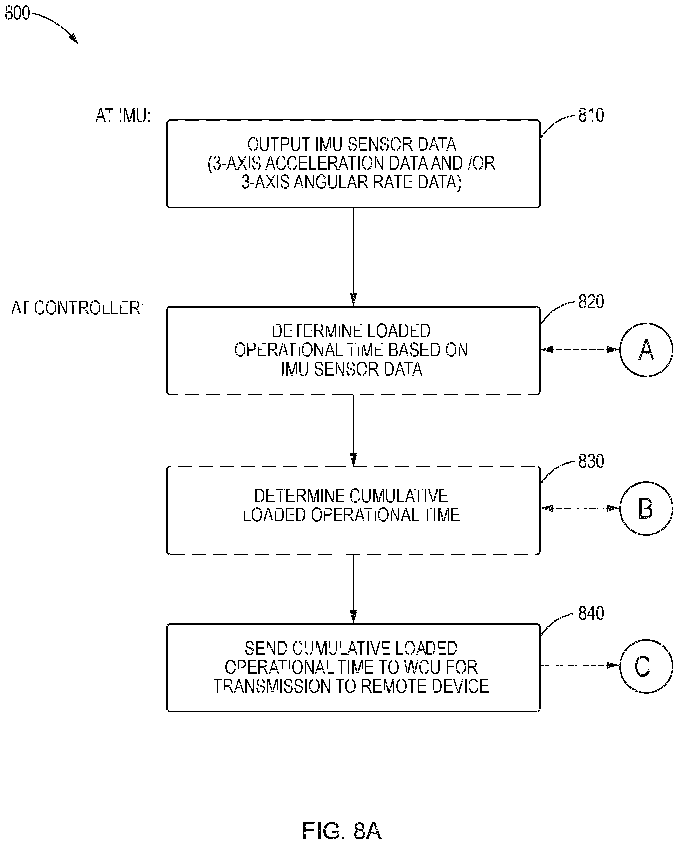

Generally, controller 160 is configured to determine power tool information based on the IMU sensor data, such as an operational state, an operational time, a cumulative operational time, an operational parameter, a timestamped tool operational event, etc., as discussed below (FIGS. 8A to 8D, 9A to 9D, 10, and 11). In certain embodiments, controller 160 is configured to determine power tool information based on both 3-axis acceleration data and 3-axis angular rate data, while in other embodiments, controller 160 is configured to determine power tool information based on either 3-axis acceleration data or 3-axis angular rate data.

In certain embodiments, the microcontroller of IMU 168 may be configured to determine power tool information based on the IMU sensor data. In other embodiments, controller 160 and the microcontroller of IMU 168 may cooperate to determine power tool information based on the IMU sensor data. In other words, the functionality described below may be performed by controller 160, the microcontroller of IMU 168, or a combination of controller 160 and the microcontroller of IMU 168.

The operational state of a power tool may include a rest state, a non-operating movement state, an unloaded operational state, a loaded operational state, etc. The operational time refers to a duration of time where the power tool is in a certain operational state. For example, the operational time may include a rest time, a non-operating movement time, an unloaded operational time, a loaded operational time, etc.

The cumulative operational time may include a cumulative rest time, a cumulative non-operating movement time, a cumulative unloaded operational time, a cumulative loaded operational time, etc. The operational parameters may include a type of power tool, a type of operation being performed by the power tool, a type of accessory mounted to the power tool, etc. The timestamped tool operational event may include a total operational time, a high loaded operational time, a low loaded operational time, a trigger press time, a trigger release time, and an idle time, etc.

WCU 164 may include a Bluetooth / BLE IC, module, SoC, etc. that includes a processor, memory, a Bluetooth transceiver, etc., a WiFi module, a communications interface, etc. WCU 164 may be configured to be coupled to network 410, and controller 160 may communicate with WCU 164 to send and receive data over network 410. For example, controller 160 may send the timestamped IMU sensor data stored in memory 162 to WCU 164 for communication over network 410.

As discussed below (FIGS. 8A to 8D, 9A to 9D,and 10), controller 160 may send the power tool information to WCU 164 for transmission over network 410 to tool monitoring device 420 and tool monitoring system 430.

In certain embodiments, WCU 164 may be configured to be directly coupled to WCU 124 of power tool 400 over a Bluetooth communication link (dashed line in FIG. 4), and controller 160 may communicate with WCU 164 to send and receive data over the Bluetooth communication link.

In other embodiments, auxiliary wireless device 150 may include serial communications unit (SCU) 166 (such as a USB module, an RS-232 module, etc.). In certain embodiments, SCU 166 may be configured to be directly coupled to SCU 126 of power tool 400 when mounted within the power tool housing (dashed line in FIG. 4). Controller 160 may communicate with SCU 166 to send and receive data over a serial communication link to SCU 126 of power tool 400.

In certain embodiments, controller 160 may send certain IMU sensor data and power tool information to WCU 164 or SCU 166 for transmission to power tool 400 for further processing or action, such as for adjusting its operating parameters, such as lowering motor current, shutting down power tool 400 when a parameter associated with the acceleration data (such as the peak absolute value of one or more axes of the 3-axis acceleration data) exceeds a certain threshold, etc.

Network 410 may include one or more local area networks, wide area networks, the Internet, etc., which may execute various network protocols, such as, for example, wired and/or wireless Ethernet, Bluetooth, etc. Network 410 may also include various combinations of wired and/or wireless physical layers, such as, copper wire or coaxial cable networks, fiber optic networks, Bluetooth wireless networks, WiFi wireless networks, CDMA, FDMA and TDMA cellular wireless networks, etc.

Generally, tool monitoring device 420 receives, stores, and displays power tool information received over network 410 (or a direct Bluetooth connection) from auxiliary wireless device 150. Tool monitoring device 420 may include, *inter alia,* a bus, one or more processors (such a central processing unit (CPU) with one or more cores, a graphics processing unit (GPU), etc.), memory, one or more wireless network interfaces coupleable to network 410, a touchscreen display, etc. Depending on the communication technique, tool monitoring device 420 may be remote device (communicating through network 410) or a local device (communicating through direct Bluetooth or any other short range communication connection), such as a portable or laptop computer, a smartphone, etc.

Generally, tool monitoring system 430 receives, stores, and displays power tool information received over network 410 from auxiliary wireless device 150. Tool monitoring system 430 may include, *inter alia,* a bus, one or more processors (such a central processing unit (CPU) with one or more cores, a GPU, etc.), memory, one or more network interfaces configured to be coupled to network 410, etc. In certain embodiments, tool monitoring system 430 may also include input/output (I/O) devices, such as a keyboard, mouse, display(s), etc. Tool monitoring system 430 may be a remote device, such as a laptop or desktop computer, a network server, etc. Tool monitoring system 430 may provide a power tool inventory and operational database for security, maintenance, and other purposes, assess user productivity and efficiency, assess the health of the tool, etc., based on the information received from auxiliary wireless device 150.

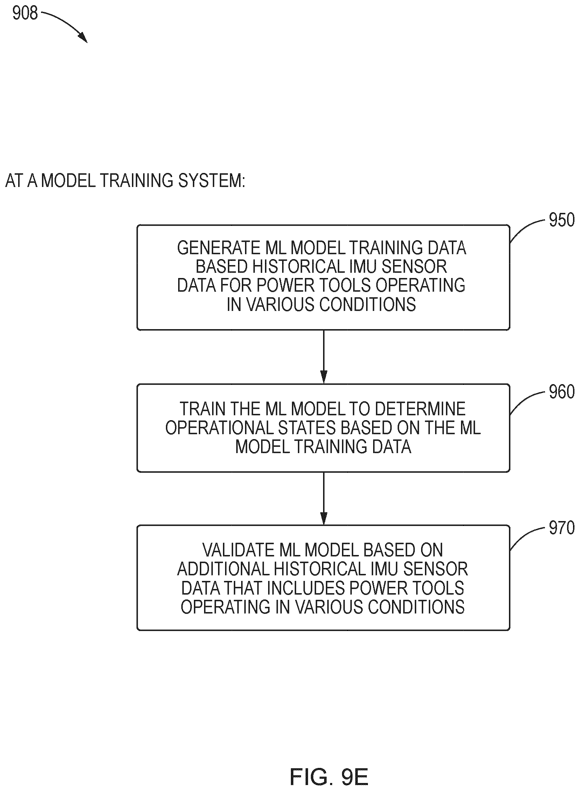

Model training system 440 may include, *inter alia,* a bus, one or more processors (such as central processing units (CPUs) with one or more processing cores, a GPU, etc.), memory, one or more network interfaces configured to be coupled to network 410, etc. In certain embodiments, model training system 440 may include special purpose processors, such as one or more neural processing units (NPUs), etc., and may also include I/O devices, such as a keyboard, mouse, display(s), etc. Model training system 440 is generally considered to be remote device, such as a desktop computer, a network server, etc. The functionality provided by model training system 440 is discussed in more detail below (FIG. 9E).

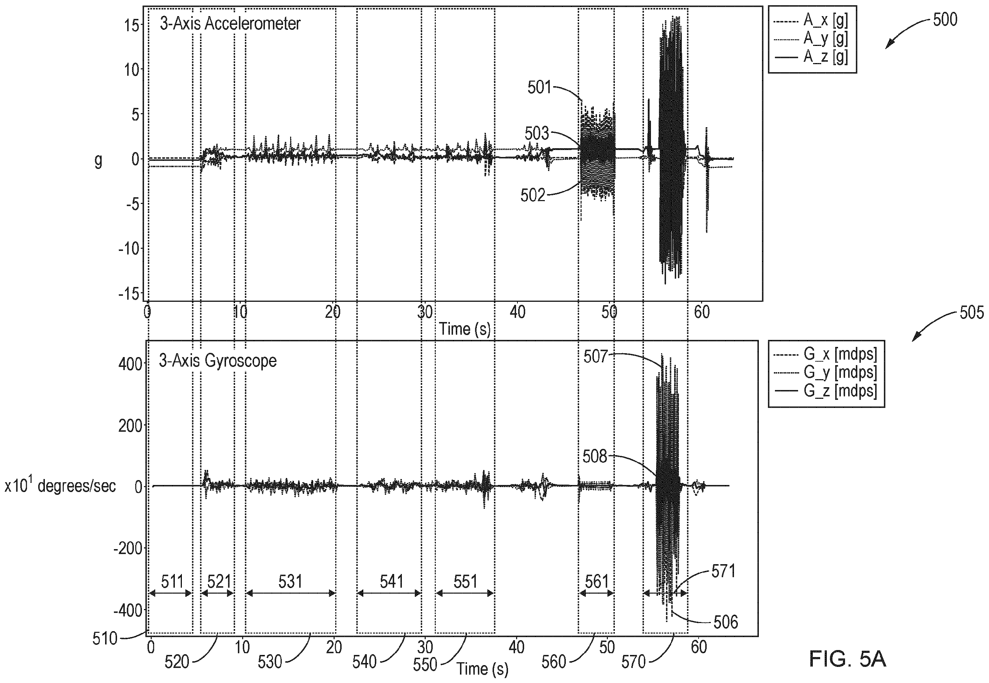

FIGS. 5A to 5F depict inertial measurement unit (IMU) sensor data plots for power tool 100 depicted in FIG. 1, in accordance with embodiments of the present disclosure. As discussed above, IMU sensor data may be used to determine power tool information, such as operational state, operational time, cumulative operational time, operational parameters, etc. Data plots 500 depict 3-axis acceleration data for power tool 100 during rest, non-operating movement, unloaded operational state, and loaded operational state. Similarly, data plots 505 depict 3-axis angular rate data for power tool 100 during rest, non-operating movement, unloaded operational state, and loaded operational state. Additionally, specific power tool parameters such as the output speed and/or the impact rate of the output may be estimated based on the IMU sensor data. Various characteristics of these data are discussed below.

FIG. 5A depicts IMU sensor data plots 500, 505 for power tool 100 (impact driver) during operations of the tool in loaded, unloaded, movement and rest states, in accordance with embodiments of the present disclosure.

IMU sensor data plot 500 presents 3-axis acceleration data (g) over time (about 60 seconds) including 1^{st} axis acceleration data 501, 2^{nd} axis acceleration data 502, and 3^{rd} axis acceleration data 503. IMU sensor data plot 505 presents 3-axis angular rate data (degrees / sec) over time (about 60 seconds) including 1^{st} axis angular rate data 506, 2^{nd} axis angular rate data 507, and 3^{rd} axis angular rate data 508. In this figure, acceleration data 501, 502, 503 are overlapped on a first plot and angular rate data 506, 507, 508 are overlapped on a second plot.

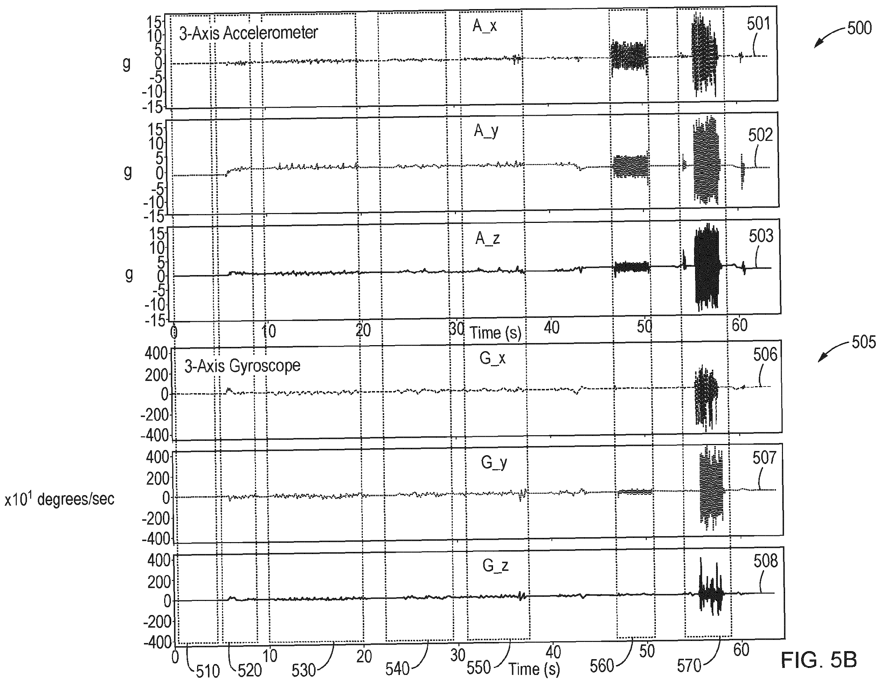

FIG. 5B depicts individual IMU sensor data plots 500, 505 for power tool 100 during operations of the tool in loaded, unloaded, movement and rest states, in accordance with embodiments of the present disclosure. Here, acceleration data 501, 502, 503 are shown on three discrete plot lines and angular rate data 506, 507, 508 are shown on three discrete plot lines.

As discussed, plots 500, 505 reflect IMU sensor data corresponding to the operation of power tool 100 operating in known operational states over 60 seconds, including rest state 510, non-operating movement state 520, non-operating movement state 530, non-operating movement state 540, non-operating movement state 550, unloaded operational state 560, and loaded operational state 570.

During rest state 510, power tool 100 is at rest (but not activated). The associated rest time 511 is about 4 seconds. During non-operating movement state 520, power tool 100 is picked up and hooked to the user's belt (but not activated). The associated non-operating movement time 521 is about 3 seconds in this example. During non-operating movement state 530, power tool 100 is hooked to the user's belt while walking (but not activated). The associated non-operating movement time 531 is about 8 seconds in this example. During non-operating movement state 540, power tool 100 is hooked to the user's belt while climbing a ladder (but not activated). The associated non-operating movement time 541 is about 6 seconds in this example. During non-operating movement state 550, power tool 100 is hooked to the user's belt while descending the ladder (but not activated). The associated non-operating movement time 551 is about 5 seconds in this example. During unloaded operational state 560, trigger 111 is activated in an unloaded condition with output accessory 102 (socket) attached. The associated unloaded operational time 561 is about 3 seconds. During loaded operational state 570, trigger 111 is activated in a loaded condition with output accessory 102 (socket) attached. The associated loaded operational time 571 is about 4 seconds.

The 3-axis acceleration data, and to a lesser extent the 3-axis angular rate data, provide insights into the acceleration and angular rate environments of power tool 100 during the known operational states.

During rest state 510, the peak absolute acceleration value of all 3 axes is less than or equal to 1 g, and the peak absolute angular rate value of all 3 axes is substantially close to 0 degrees / sec.

During non-operating movement states 520, 530, 540, 550, the movement observable in the 3-axis acceleration data exhibits either a non-uniform pattern corresponding to sudden and isolated movements of the power tool, or a patterned behavior corresponding to movement of the power tool due to walking or climbing, but one having a frequency that is significantly smaller than a frequency seen during an operating state of the power tool. For example, during non-operating movement state 530, a walking cadence may be observed in at least one axis of the 3-axis acceleration data, but the frequency of the walking cadence (e.g., smaller than or equal to approximately 7 Hz) will be significantly lower than a frequency domain of an operating state of the power tool (e.g., greater than or equal to approximately 15 Hz). During non-operating movement state 540, a climbing cadence may be observed in at least one axis of the 3-axis acceleration data corresponding to each step of the climb, but once again the frequency of the climbing cadence will be significantly lower than the frequency domain of the operating state of the power tool. During non-operating movement state 550, a descending cadence may be observed in at least one axis of the 3-axis acceleration data with a similarly small frequency Furthermore, the magnitude of the 3-axis accelerometer data is significantly smaller than a magnitude seen during an operating of the power tool.

In an embodiment, during the non-operating movement states 520, 530, 540, 550, a repeated pattern of each of the individual 3-axis acceleration data 501, 502, 503 plot lines remains within a pre-determined non-operating acceleration movement zone defined by an upper threshold and a lower threshold (e.g., +3 to -3 G). Similarly, a repeated pattern each of the individual 3-axis angular rate data 506, 507, 508 plot lines remain within a pre-determined non-operating angular rate movement zone defined by an upper threshold and a lower threshold (e.g., approximately +100 to -100 degrees / sec). Furthermore, during the non-operating movement states 520, 530, 540, 550, at least where a patterned behavior is exhibited, the sum of the amplitudes of the 3-axis acceleration data 501, 502, 503 remains within a predetermined non-operating acceleration movement zone (e.g., approximately +6 to -6 G) and the sum of the 3-axis angular rate data 506, 507, 508 remains within a predetermined non-operating angular rate movement zone (e.g., approximately +100 to -100 degrees / sec). Moreover, during the non-operating movement states 520, 530, 540, 550, at least where a patterned behavior is exhibited, the RMS (Room Mean Square) of the amplitudes of the 3-axis acceleration data 501, 502, 503 remains within a predetermined non-operating acceleration movement RMS zone and the RMS of the 3-axis angular rate data 506, 507, 508 remains within a predetermined non-operating angular rate movement RMS zone.

Controller 160 may use any of these parameters or combinations thereof to distinguish between the non-operating movement state of the power tool and a rested state of power tool 100 as previously discussed, and an operational state of the power tool as discussed below. Controller 160 may also detect occurrences of isolated and unrepeated events (such as, e.g., lifting the tool from the stationary position, securing the tool to the user's belt, removing the tool from the user's belt, etc.) within the non-operating movement state based on isolated high-amplitude spikes in one or more of the 3-axis acceleration data 501, 502, 503 and/or the 3-axis angular rate data 506, 507, 508.

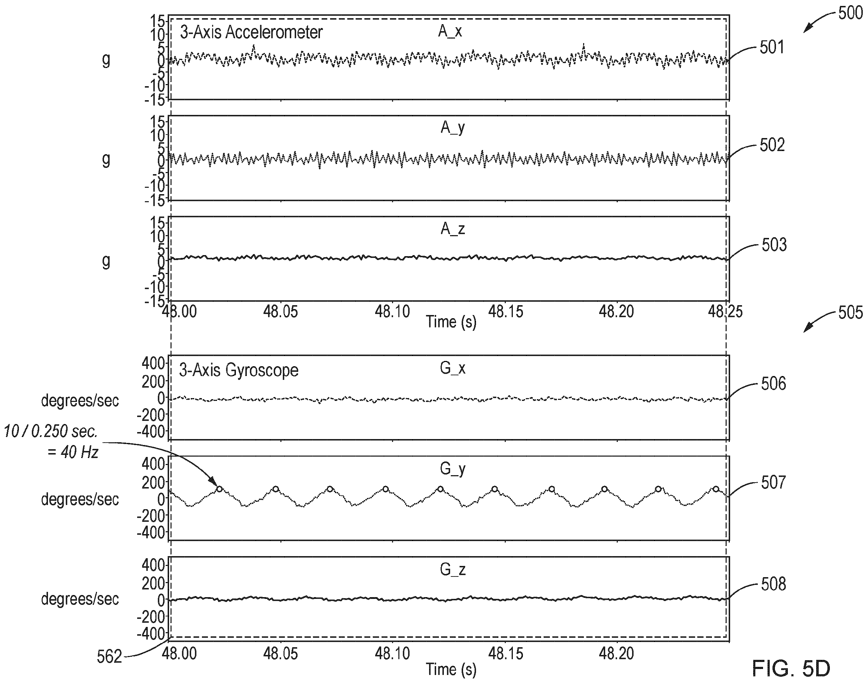

During unloaded operational state 560, the peak absolute value (i.e., peak amplitude) of at least two axes of the acceleration data is greater than 2 g over a 50 ms window (see FIG. 5D, 1^{st} axis acceleration data 501 and 2^{nd} axis acceleration data 502). Filtering and processing the 3-axis acceleration data indicates sinusoidal behavior with a frequency that aligns with an unloaded output shaft speed. The frequency of the at least two axes of the acceleration data is greater than approximately 15 Hz, preferably greater than approximately 20 Hz. The 3-axis angular rate data additionally includes a sinusoidal waveform visible on the axis of motor rotation with a frequency (40 Hz) that aligns with an unloaded output shaft speed (2,400 rpm) (see FIG. 5D, 2^{nd} axis angular rate data).

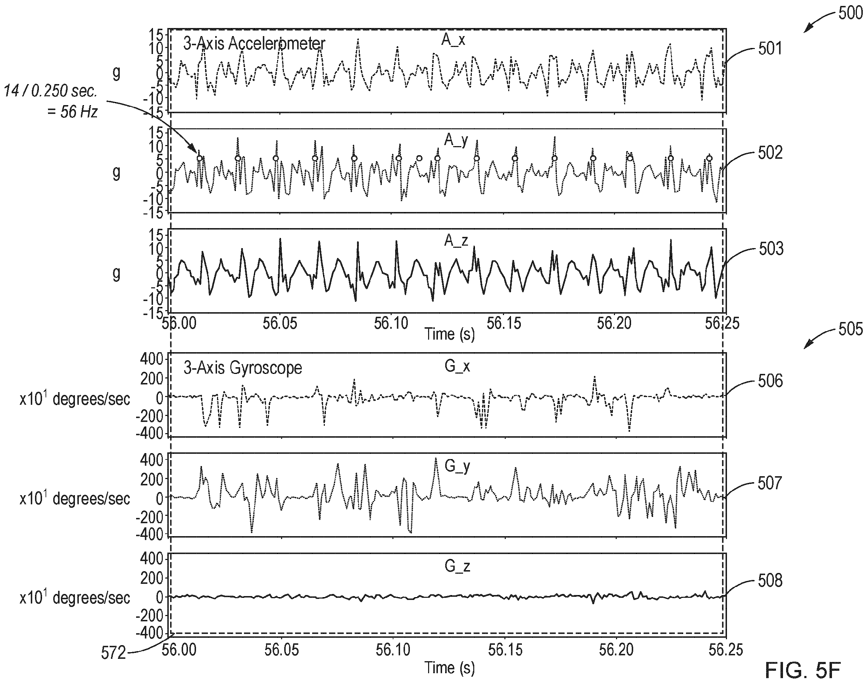

During loaded operational state 570, the peak absolute value of all axes of the 3-axis acceleration data is greater than 6 g over a 50 ms window (see FIG. 5F). Filtering and processing the 3-axis acceleration data indicates sinusoidal behavior with a frequency (56 Hz) that aligns with the impact rate of the impactor assembly (-3,400 impacts per minute or ipm). Intermediate, smaller peaks are observable that represent hammer rebound of the impactor assembly. The frequency of the acceleration data is greater than approximately 15 Hz, preferably greater than approximately 20 Hz. The 3-axis angular rate data also exhibits significantly higher amplitude in comparison to the non-operating movement states 520, 530, 540, 550.

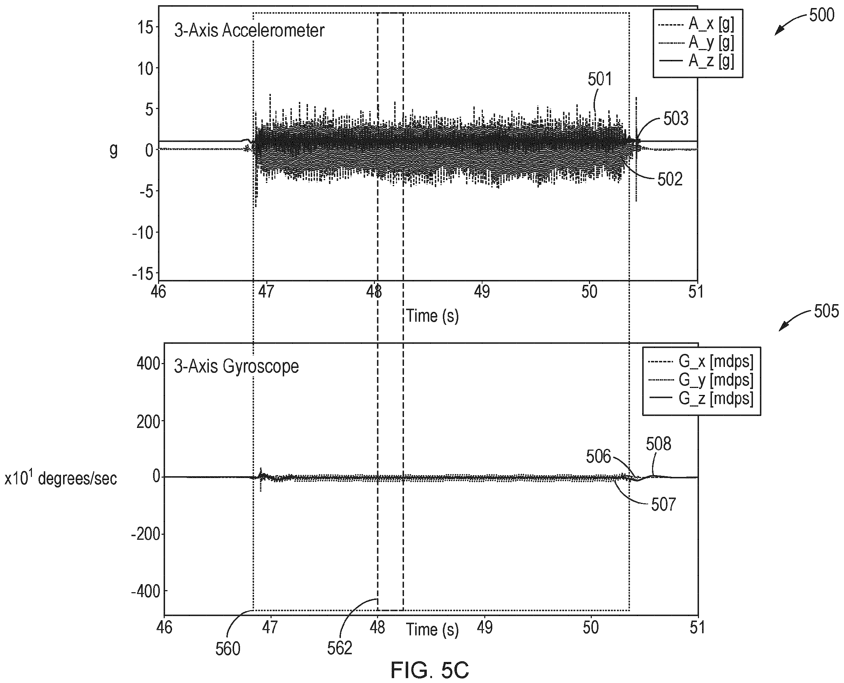

FIG. 5C depicts IMU sensor data plots 500, 505 for power tool 100 during operation of the tool in the unloaded operational state, in accordance with embodiments of the present disclosure.

IMU sensor data plot 500 presents 3-axis acceleration data (g) over unloaded operational state 560 including 1^{st} axis acceleration data 501, 2^{nd} axis acceleration data 502, and 3^{rd} axis acceleration data 503. IMU sensor data plot 505 presents 3-axis angular rate data (degrees / sec) over unloaded operational state 560 including 1^{st} axis angular rate data 506, 2^{nd} axis angular rate data 507, and 3^{rd} axis angular rate data 508.

An example partial unloaded operational state window 562 (over about 0.25 seconds) is also identified to provide a zoomed-in and detailed view of the IMU sensor data plot in the unloaded operational state in the next figure (FIG. 5D). As shown here, and with continued reference to FIGS. 5A and 5B, the amplitude of the acceleration data in the unloaded operational state far exceeds the amplitude of the acceleration data in the non-operating movement states 520, 530, 540, 550, but the amplitude is substantially smaller than the amplitude of the acceleration data in loaded operational state 570. This information may be used by controller 160 to differentiate between these states. Further, the angular rate data does not exhibit a high amplitude, and in fact exhibits a lower amplitude than both non-operating movement states 520, 530, 540, 550 as well as loaded operational state 570. This is due to the operator holding the tool still during this particular test example. However, this observation may be used by controller 160 as another data point to distinguish between loaded and unloaded operational states.

FIG. 5D depicts IMU sensor data plots 500, 505 for power tool 100 during operation of the tool in the unloaded operational state within the partial unloaded operational state window 562, in accordance with embodiments of the present disclosure.

IMU sensor data plot 500 individually presents 3-axis acceleration data (g) over partial unloaded operational state window 562 including 1^{st} axis acceleration data 501, 2^{nd} axis acceleration data 502, and 3^{rd} axis acceleration data 503. IMU sensor data plot 505 individually presents 3-axis angular rate data (degrees / sec) over partial unloaded operational state window 562 including 1^{st} axis angular rate data 506, 2^{nd} axis angular rate data 507, and 3^{rd} axis angular rate data 508. Second axis angular rate data 507 includes a sinusoidal waveform visible on the axis of motor rotation with a frequency (40 Hz) that aligns with an unloaded output shaft speed (2,400 rpm). The sinusoidal waveform is associated with a rotating mass located in the hammering mechanism of the impact wrench, which causes an imbalance in the rotation of the output shaft. Controller 160 may rely on detection of this sinusoidal waveform on at least one of the angular rate data plot lines as yet another data point used to distinguish between unloaded operational state 560 and the other states, such as such as loaded operational state 570, non-operating movement states 520, 530, 540, 550, rest state 510, etc.

In an example, the detected frequency of this sinusoidal waveform may also be used by controller 160 to estimate the unloaded rotational speed of the output shaft. For example, controller 160 may be configured to detect a sinusoidal pattern on one or more of the angular rate data waveforms (e.g., where a peak of the waveform exceeds a threshold of 100 degrees/sec), calculate the frequency of the waveform with the detected sinusoidal pattern, and estimate the unloaded rotational speed of the shaft as a function of the calculated frequency. This information may be wirelessly relayed by controller 160.

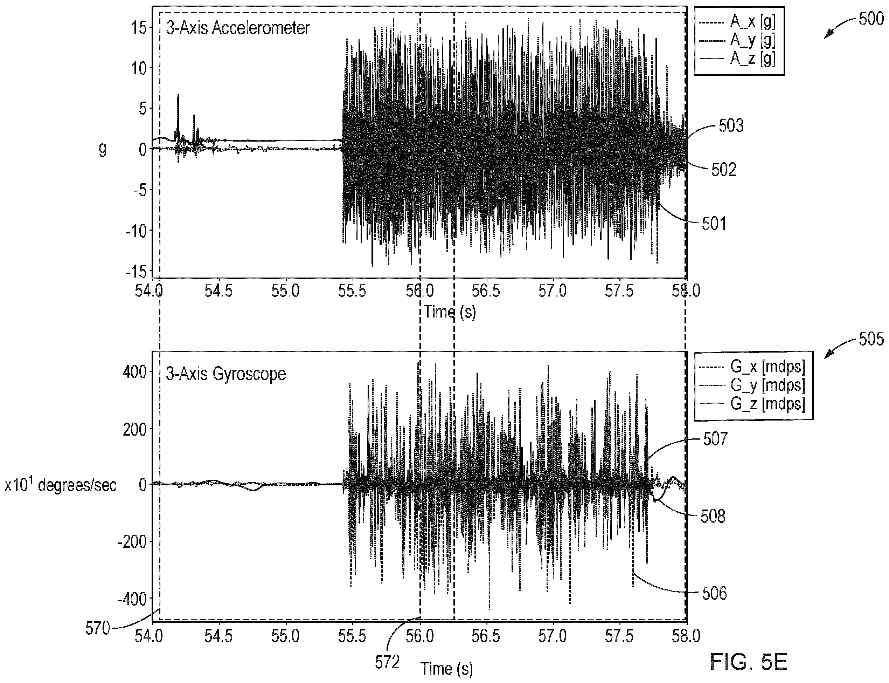

FIG. 5E depicts IMU sensor data plots 500, 505 for power tool 100 during operation of the tool in the loaded operational state, in accordance with embodiments of the present disclosure.

IMU sensor data plot 500 presents 3-axis acceleration data (g) over loaded operational state 570 including 1^{st} axis acceleration data 501, 2^{nd} axis acceleration data 502, and 3^{rd} axis acceleration data 503. IMU sensor data plot 505 presents 3-axis angular rate data (degrees / sec) over loaded operational state 570 including 1^{st} axis angular rate data 506, 2^{nd} axis angular rate data 507, and 3^{rd} axis angular rate data 508.

An example partial loaded operational state window 572 (over about 0.25 seconds) is also identified to provide a zoomed-in and detailed view of the IMU sensor data plot in the loaded operational state in the next figure (FIG. 5F). As shown here in this example, and with continued reference to FIGS. 5A and 5B, the amplitude of the acceleration data on all three axes is substantially greater than the amplitude of the acceleration data in unloaded operational state 560. Similarly, the amplitude of the angular rate data on at least two axes is substantially greater than the amplitude of the angular rate data in unloaded operational state 560. This information may be used by controller 160 to differentiate between loaded operational state 570 and the other states, such as rest state 510, non-operating movement states 520, 530, 540, 550, and unloaded operational state 560.

The acceleration data for all three axes include many positive and negative local peak values, and indicate periodically changing signals that may include sinusoidal components. The average of the positive local peak values for each axis is at least 4 g, while the average of the negative local peak values for each axis is at least -4 g. In other words, the average of the absolute values of the positive and negative local peak values for each axis is at least 4 g. The acceleration data for at least one of the axes has an average absolute local peak value of at least 8 g, such as 1^{st} axis acceleration data 501 and 2^{nd} axis acceleration data 502. An envelope formed by connecting the absolute local peak values for at least one axis has an average value of at least 10 g, such as 1^{st} axis acceleration data 501. Similarly, for the angular rate data, an envelope formed by connecting the absolute local peak values for at least one axis has an average value of at least 2,000 degrees/sec, such as 2^{nd} axis angular rate data 507. Additionally, the angular rate data for at least one least one axis has an average absolute peak value that is substantially greater than the average absolute peak value for at least one other axis. In another example, 1^{st} axis angular rate data 506 or 2^{nd} axis angular rate data 507 may be determined to be at least twice the average absolute peak value of 3^{rd} axis angular rate data 507 (such as at least three times the average absolute peak value). This information may be used by controller 160 to further differentiate between loaded operational state 570 and the other states, such as rest state 510, non-operating movement states 520, 530, 540, 550, and unloaded operational state 560.

FIG. 5F depicts IMU sensor data plots 500, 505 for power tool 100 during operation of the tool in the loaded operational state within the partial operational state window 572, in accordance with embodiments of the present disclosure.

IMU sensor data plot 500 individually presents 3-axis acceleration data (g) over loaded operational state window 572 including 1^{st} axis acceleration data 501, 2^{nd} axis acceleration data 502, and 3^{rd} axis acceleration data 503. IMU sensor data plot 505 individually presents 3-axis angular rate data (degrees / sec) over loaded operational state window 572 including 1^{st} axis angular rate data 506, 2^{nd} axis angular rate data 507, and 3^{rd} axis angular rate data 508. All three axes of the 3-axis acceleration data indicate sinusoidal behavior with a frequency (56 Hz) that aligns with the impact rate of the impactor assembly (-3,400 impacts per minute or ipm). See, for example, 2^{nd} axis acceleration data 502. Intermediate, smaller peaks are observable that represent hammer rebound of the impactor assembly. In an example, the detected frequency of this sinusoidal waveform may be used by controller 160 to estimate the loaded impact rate of the output shaft. Controller 160 may rely on detection of this sinusoidal waveform on one or more of the acceleration plot lines as yet another data point used to distinguish between loaded operational state 570 and the other states, such as unloaded operational state 560, non-operating movement states 520, 530, 540, 550, rest state 510, etc.

In an example, the detected frequency of this sinusoidal waveform on the accelerometer waveforms may also be used by controller 160 to estimate the loaded impact rate of the output shaft. For example, controller 160 may be configured to detect a sinusoidal pattern on one or more of the acceleration date waveforms (e.g., where a peak of the waveform exceeds a threshold of 4 g), calculate the frequency of the waveform with the detected sinusoidal pattern, and estimate the loaded impact rate of the shaft as a function of the calculated frequency. This information may be wirelessly relayed by controller 160.

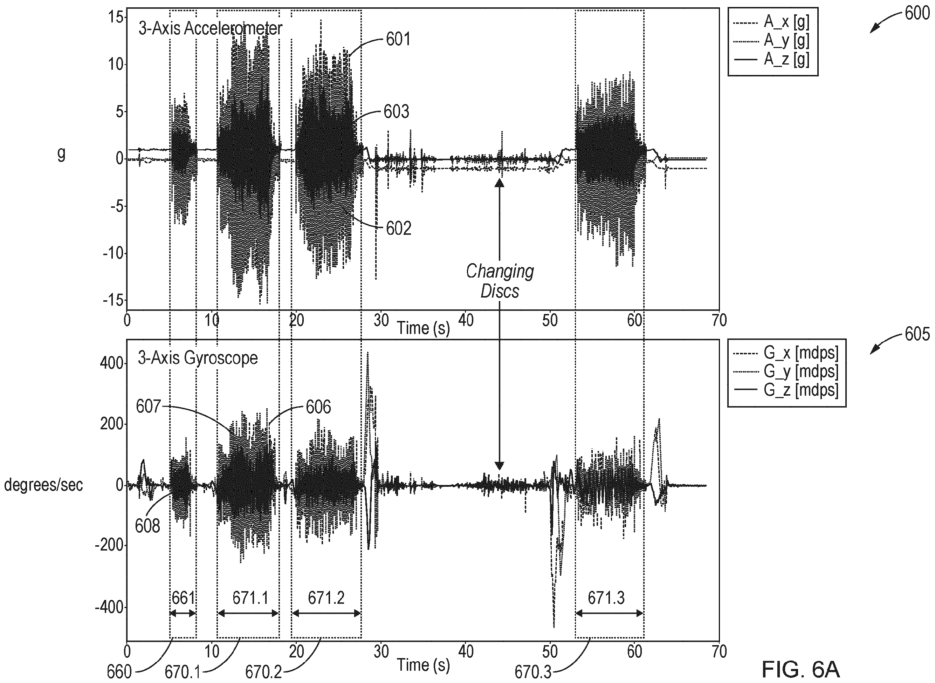

FIGS. 6A to 6J depict IMU sensor data plots 600, 605 for power tool 200, in accordance with embodiments of the present disclosure. As discussed above, IMU sensor data may be used to determine power tool information, such as operational state, operational time, cumulative operational time, operational parameters, etc. Data plots 600 depict 3-axis acceleration data for power tool 200 during unloaded and loaded operational states (3-axis acceleration data for rest and non-operating movement states will be similar to the data presented for power tool 100 in data plots 500). Similarly, data plots 605 depict 3-axis angular rate data for power tool 100 during unloaded and loaded operational states (3-axis angular rate data for rest and non-operating movement states will be similar to the data presented for power tool 100 in data plots 505). Power tool 200, which in this example is an angle grinder, is utilized herein to highlight capabilities of controller 160 to distinguish between types of power tool to which the auxiliary wireless device 150 is mounted.

Specifically, as discussed below in detail, the IMU sensor data plots 600 and 605 exhibit unique characteristics that are discernable from characteristics of the IMU sensor data plots 500 and 505 when using an impact wrench, and they can be used by controller 160 to identify the type of power tool (e.g., angle grinder versus impact wrench) to which the auxiliary wireless device 150 is coupled. Further highlighted below are capabilities of controller 160 to identify the type of power tool accessory mounted onto the power tool (e.g., type of grinding disc), and the type of operation being performed by the accessory (e.g., heavy versus light grinding). Various characteristics of these data are discussed below.

FIG. 6A depicts IMU sensor data plots 600, 605 for power tool 200 (angle grinder) during operation of the tool in the unloaded and loaded operational states, in accordance with embodiments of the present disclosure.

IMU sensor data plot 600 presents 3-axis acceleration data (g) over time (about 70 seconds) including 1^{st} axis acceleration data 601, 2^{nd} axis acceleration data 602, and 3^{rd} axis acceleration data 603. IMU sensor data plot 605 presents 3-axis angular rate data (degrees / sec) over time (about 70 seconds) including 1^{st} axis angular rate data 606, 2^{nd} axis angular rate data 607, and 3^{rd} axis angular rate data 608. In this figure, acceleration data 601, 602, 603 are overlapped on a first plot and angular rate data 606, 607, 608 are overlapped on a second plot.

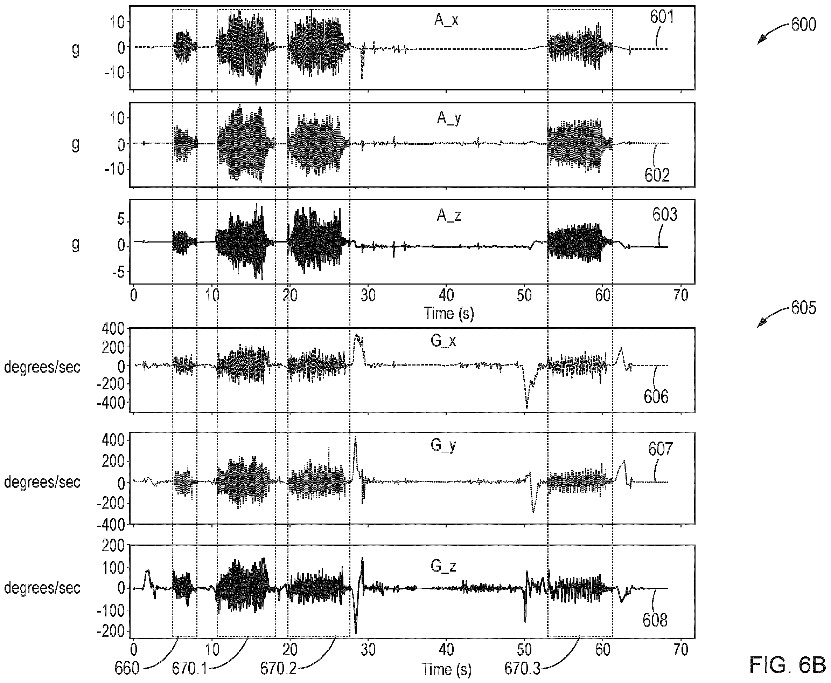

FIG. 6B depicts IMU sensor data plots 600, 605 for power tool 200 during operation of the tool in the unloaded and loaded operational states, in accordance with embodiments of the present disclosure. Here, acceleration data 601, 602, 603 are shown on three discrete plot lines and angular rate data 606, 607, 608 are shown on three discrete plot lines.

Plots 600, 605 reflect IMU sensor data corresponding to the operation of power tool 200 operating in known operational states over 70 seconds, including unloaded operational state 660, heavy loaded operational state 670.1, light loaded operational state 670.2, and loaded operational state 670.3 (using an alternative grinding disc).

During unloaded operational state 660, paddle trigger 211 is activated in an unloaded condition with output accessory 202 (e.g., a 4.5" abrasive grinding disc) attached. The associated unloaded operational time 661 is about 2 seconds in this example. During heavy loaded operational state 670.1, paddle trigger 211 is activated in a loaded condition (heavy grinding) with output accessory 102 (the 4.5" abrasive grinding disc) attached. The associated loaded operational time 671.1 is about 6 seconds in this example. During light loaded operational state 670.2, paddle trigger 211 is activated in a loaded condition (light grinding on an alternative workpiece or on the same workpiece with application of less force) with output accessory 102 (the 4.5" abrasive grinding disc) attached. The associated loaded operational time 671.2 is about 6 seconds in this example. During loaded operational state 670.3 (using an alternative grinding disc), paddle trigger 211 is activated in a loaded condition (light material removal) with output accessory 102 (80-grit flap disc) attached. The associated loaded operational time 671.3 is about 6 seconds in this example.

The 3-axis acceleration data and the 3-axis angular rate data provide insights into the acceleration and angular rate environments of power tool 200 during the known operational states.

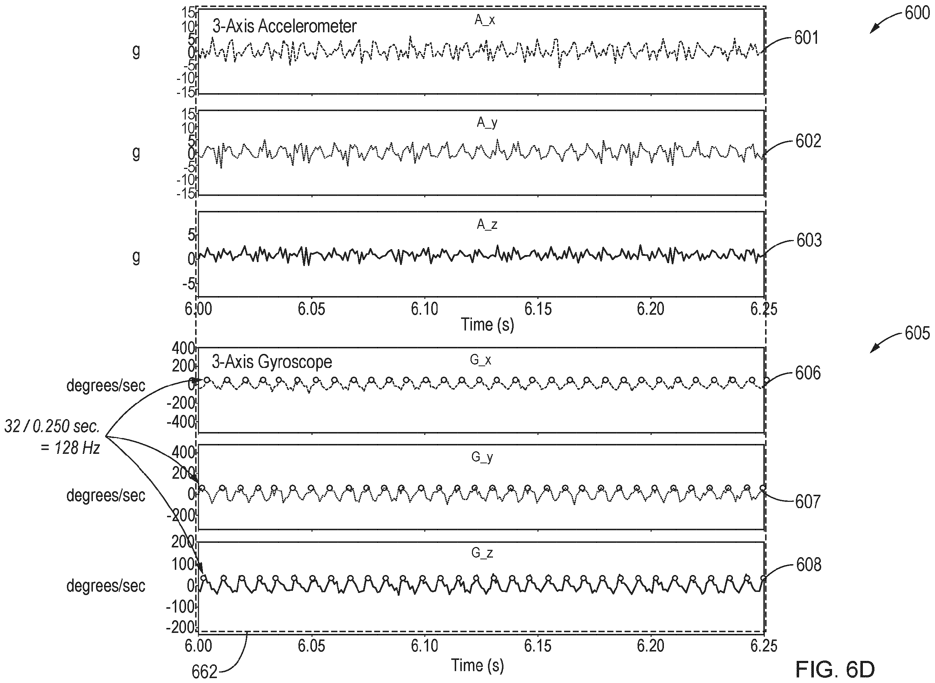

During unloaded operational state 660, the peak absolute value of at least two axes of the acceleration data is greater than 4 g over a 50 ms window (see FIG. 6D, 1^{st} axis acceleration data 601 and 2^{nd} axis acceleration data 602). Filtering and processing the 3-axis acceleration data indicates sinusoidal behavior with a frequency (128 Hz) that aligns with an unloaded output shaft speed (7,800 rpm). More visibly, the 3-axis angular rate data includes sinusoidal waveforms visible on all three axes with a frequency (128 Hz) that aligns with an unloaded output shaft speed (7,800 rpm) (see FIG. 6D).

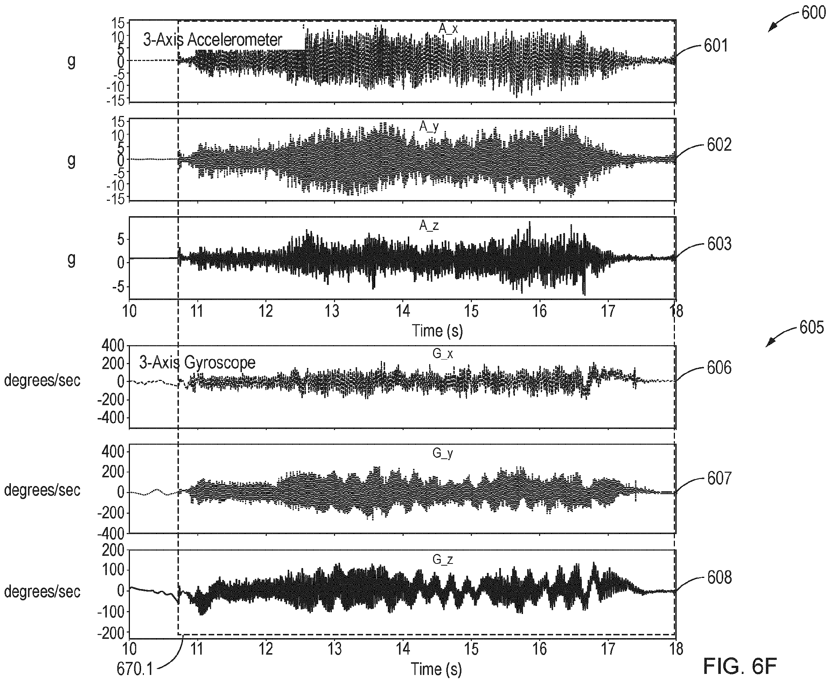

During heavy loaded operational state 670.1, the peak absolute value of at least two axes of the acceleration data is greater than 12 g over a 50 ms window (see FIG. 6F, 1^{st} axis acceleration data 601 and 2^{nd} axis acceleration data 602). Filtering and processing the 3-axis acceleration data indicates sinusoidal behavior with a frequency that aligns with unloaded output shaft speed. The 3-axis angular rate data may include a similar frequency component, and the peak absolute value of at least one axis of the angular rate data exceeds 180 degrees/sec. Additionally, the 3-axis angular rate data exhibits a sinusoidal pattern visible on at least two axes with a second frequency component (4 Hz) that aligns with user-induced movement (see FIG. 6F, 3^{rd} axis angular rate data 608) commonly associated with a heavy grinding operation. Generally, the user-induced movement of power tool 200 (such as rhythmic tool oscillations) may be from 1 Hz to 5 Hz.

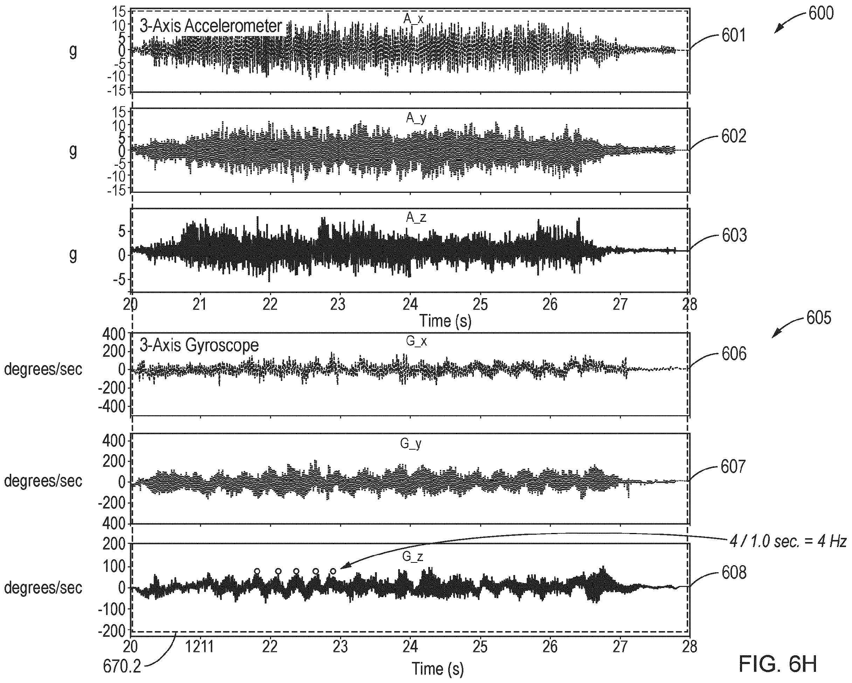

During light loaded operational state 670.2, the peak absolute value of at least two axes of the acceleration data is greater than 8 g over a 50 ms window (see FIG. 6H, 1^{st} axis acceleration data 601 and 2^{nd} axis acceleration data 602). Filtering and processing the 3-axis acceleration data indicates sinusoidal behavior with a frequency that aligns with unloaded output shaft speed. The 3-axis angular rate date may include a similar frequency component. The peak absolute value of at least one axis of the angular rate data exceeds approximately 160 degrees/sec. Overall, the acceleration data and the angular rate data may include similar frequencies exhibited during loaded operational state 670.1, but with smaller overall amplitudes. This distinction may be determined as a difference between the peak absolute values, between the average amplitudes, between the RMS amplitude values, or as a function of an area of an envelope defined by the peak values. Additionally, the 3-axis angular rate data exhibits a sinusoidal pattern visible on at least two axes with a second frequency component (4 Hz) that aligns with user-induced movement (see FIG. 6H, 3^{rd} axis angular rate data 608) commonly associated with a light grinding operation. Generally, the user-induced movement of power tool 200 (such as rhythmic tool oscillations) may be from 1 Hz to 5 Hz.

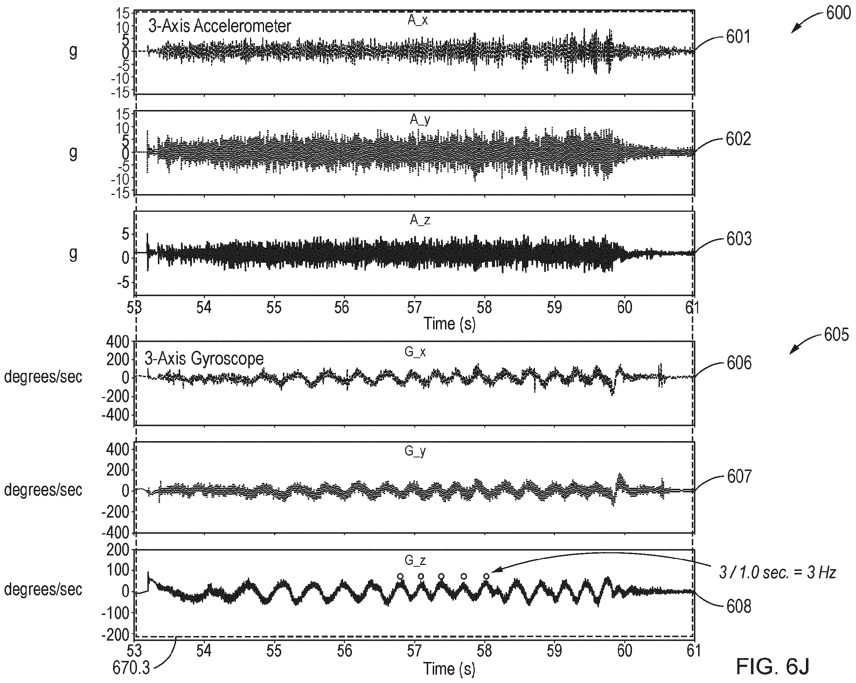

During loaded operational state 670.3 (using an alternative grinding disc), the peak absolute value of at least two axes of the acceleration data is greater than 4 g but smaller than 8 g over a 50 ms window (see FIG. 6J, 1^{st} axis acceleration data 601 and 2^{nd} axis acceleration data 602). Filtering and processing the 3-axis acceleration data indicates sinusoidal behavior with a frequency that aligns with unloaded output shaft speed. The 3-axis angular rate date may include a similar frequency component. The peak absolute value of at least one axis of the angular rate data is smaller than 160 degrees/sec. Overall, the acceleration data and the angular rate data may include similar frequency components exhibited during loaded operational state 670.1, but with smaller overall amplitudes. The 3-axis angular rate data further exhibits a sinusoidal pattern visible on at least two axes with a frequency (3 Hz) that aligns with user-induced movement (see FIG. 6J, 3^{rd} axis angular rate data 608) commonly associated with a flap disc grinding operation. Generally, the user-induced movement of power tool 200 (such as rhythmic tool oscillations) may be from 1 Hz to 5 Hz.

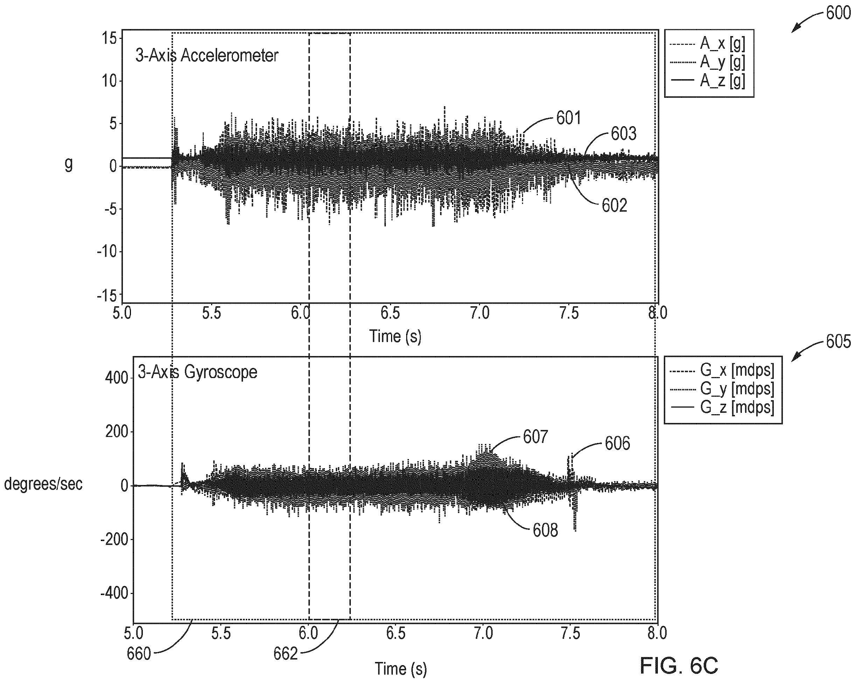

FIG. 6C depicts IMU sensor data plots 600, 605 for power tool 200 during operation of the tool in unloaded operational state 660 in accordance with embodiments of the present disclosure.

IMU sensor data plot 600 presents 3-axis acceleration data (g) over unloaded operational state 660 including 1^{st} axis acceleration data 601, 2^{nd} axis acceleration data 602, and 3^{rd} axis acceleration data 603. IMU sensor data plot 605 presents 3-axis angular rate data (degrees / sec) over unloaded operational state 660 including 1^{st} axis angular rate data 606, 2^{nd} axis angular rate data 607, and 3^{rd} axis angular rate data 608.

An example partial unloaded operational state window 662 (over about 0.25 seconds) is also identified to provide a zoomed-in and detailed view of the IMU sensor data plot in the unloaded operational state in the next figure (FIG. 6D). As shown here in this example, the amplitude of the acceleration data in unloaded operational state 660 far exceeds the amplitude of the acceleration data in the preceding time period of non-operating movement or rest (from 0 seconds to about 5 seconds), and is generally two to three times smaller than the amplitude of the acceleration data in loaded operational state 670. Similarly, the amplitude of the angular rate data in unloaded operational state 660 far exceeds the amplitude of the angular rate data in the preceding time period of non-operating movement or rest, and is generally two to three times smaller than the amplitude of the acceleration data in loaded operational state 670. This information may be used by controller 160 to further differentiate between unloaded operational state 660 and other states, such as the rest state, the non-operating movement states, and loaded operational state 670.

FIG. 6D depicts IMU sensor data plots 600, 605 for power tool 200 during operation of the tool in the unloaded operational state 660 within the example partial unloaded operational state window 662, in accordance with embodiments of the present disclosure.

IMU sensor data plot 600 individually presents 3-axis acceleration data (g) over partial unloaded operational state window 662 including 1^{st} axis acceleration data 601, 2^{nd} axis acceleration data 602, and 3^{rd} axis acceleration data 603. IMU sensor data plot 605 individually presents 3-axis angular rate data (degrees / sec) over partial unloaded operational state window 662 including 1^{st} axis angular rate data 606, 2^{nd} axis angular rate data 607, and 3^{rd} axis angular rate data 608. The 3-axis angular rate data includes sinusoidal waveforms visible on all three axes with a frequency (128 Hz) that aligns with an unloaded output shaft speed (7,800 rpm).

As shown in FIGS. 6C and 6D, and previously described, during unloaded operational state 660, the peak absolute value of at least two axes of the acceleration data is greater than approximately 4 g over a 50 ms window (see 1^{st} axis acceleration data 601 and 2^{nd} axis acceleration data 602), but the peak absolute value of all three axes of the acceleration data is smaller than approximately 6 g. Filtering and processing the 3-axis acceleration data indicates sinusoidal behavior with a frequency (128 Hz) that aligns with an unloaded output shaft speed (7,800 rpm).

Furthermore, the 3-axis angular rate data includes sinusoidal waveforms visible on all three axes with a frequency (128 Hz) that aligns with an unloaded output shaft speed (7,800 rpm). The absolute peak of the 3-axis angular rate data is in the range of approximately 80 degrees/sec. In other words, both the 3-axis acceleration data and the 3-axis angular rate data form a profile (i.e., formed by the absolute peak of the waveform with the highest amplitude, the sum of the three axes waveform, the RMS values, etc.) that is greater than a similar profile formed in the rest state, but is less than a similar profile formed in loaded operational states 670.1, 670.2, 670.3. Controller 160 may use any or all of this information to distinguish between an unloaded operational state 660 and the other states, such as loaded operational states 670.1, 670.2, 670.3.

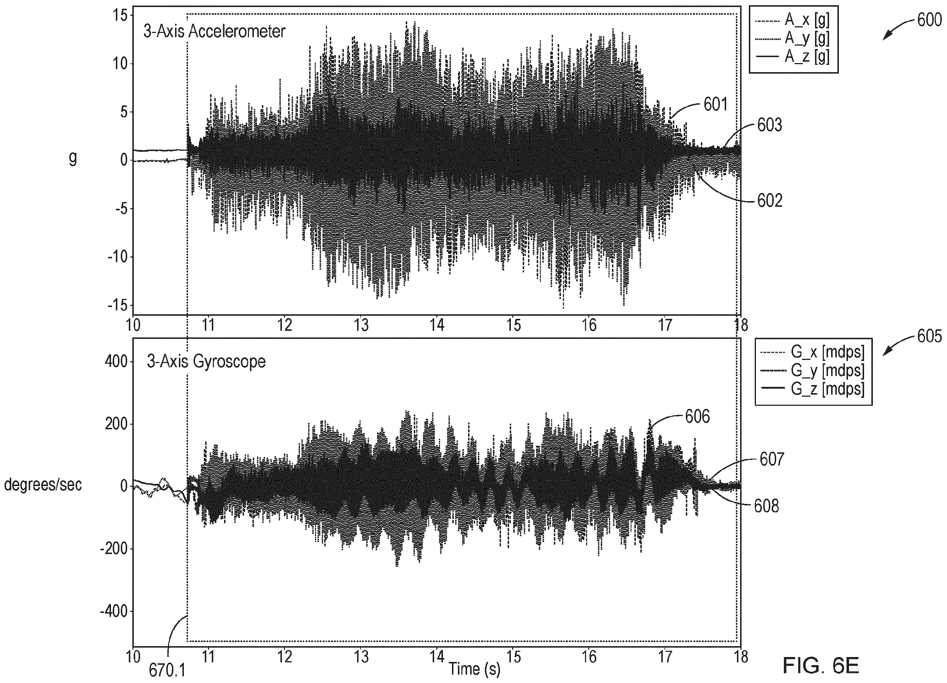

FIG. 6E depicts IMU sensor data plots 600, 605 for power tool 200 during operation of the tool in the heavy loaded operational state 670.1, in accordance with embodiments of the present disclosure. In this figure, acceleration data 601, 602, 603 are overlapped on a first plot and angular rate data 606, 607, 608 are overlapped on a second plot.

FIG. 6F depicts IMU sensor data plots 600, 605 for power tool 200 during operation of the tool in the heavy loaded operational state 670.1, in accordance with embodiments of the present disclosure. Here, acceleration data 601, 602, 603 are shown on three discrete plot lines and angular rate data 606, 607, 608 are shown on three discrete plot lines.

IMU sensor data plot 600 individually presents 3-axis acceleration data (g) over loaded operational state 670.1 including 1^{st} axis acceleration data 601, 2^{nd} axis acceleration data 602, and 3^{rd} axis acceleration data 603. IMU sensor data plot 605 individually presents 3-axis angular rate data ((degrees / sec) over loaded operational state 670.1 including 1^{st} axis angular rate data 606, 2^{nd} axis angular rate data 607, and 3^{rd} axis angular rate data 608. The 3-axis angular rate data includes sinusoidal waveforms visible on the all three axes with a frequency (4 Hz) that aligns with user-induced movement, such as 3^{rd} axis angular rate data 608. Generally, the user-induced movement of power tool 200 (such as rhythmic tool oscillations) may be from 1 Hz to 5 Hz.

As shown here and previously described, during heavy loaded operational state 670.1, the peak absolute value of at least two axes of the acceleration data is greater than 12 g over a 50 ms window (see 1^{st} axis acceleration data 601 and 2^{nd} axis acceleration data 602). Filtering and processing the 3-axis acceleration data indicates sinusoidal behavior with a frequency that aligns with unloaded output shaft speed. The 3-axis angular rate data may include a similar frequency component, and the peak absolute value of at least one axis of the angular rate data exceeds 200 degrees/sec.

Additionally, the 3-axis angular rate data exhibits a sinusoidal pattern visible on at least two axes with a second frequency component (4 Hz) that aligns with user-induced movement (see 3^{rd} axis angular rate data 608) commonly associated with a heavy grinding operation. Generally, the user-induced movement of power tool 200 (such as rhythmic tool oscillations) may be from 1 Hz to 5 Hz. Controller 160 may use any or all of this information to distinguish between heavy loaded operational state 670.1 and the other loaded operational states, such as light loaded operational state 670.2 and loaded operational state 670.3 (using an alternative grinding disc). In other words, one or both of the frequency and/or an amplitude profile (i.e., formed by the absolute peak of the waveform with the highest amplitude, the sum of the three axes waveform, the RMS values, etc.) of one or both of the acceleration data and/or the angular rate data can be used by controller 160 to distinguish between levels of grinding operation (i.e., light versus heavy) when using a single grinding disc. In an example, controller 160 may detect the grinding operation, classify the grinding operation into one of a preset number of load levels (e.g., in this example, light versus heavy), and wirelessly communication the classification.

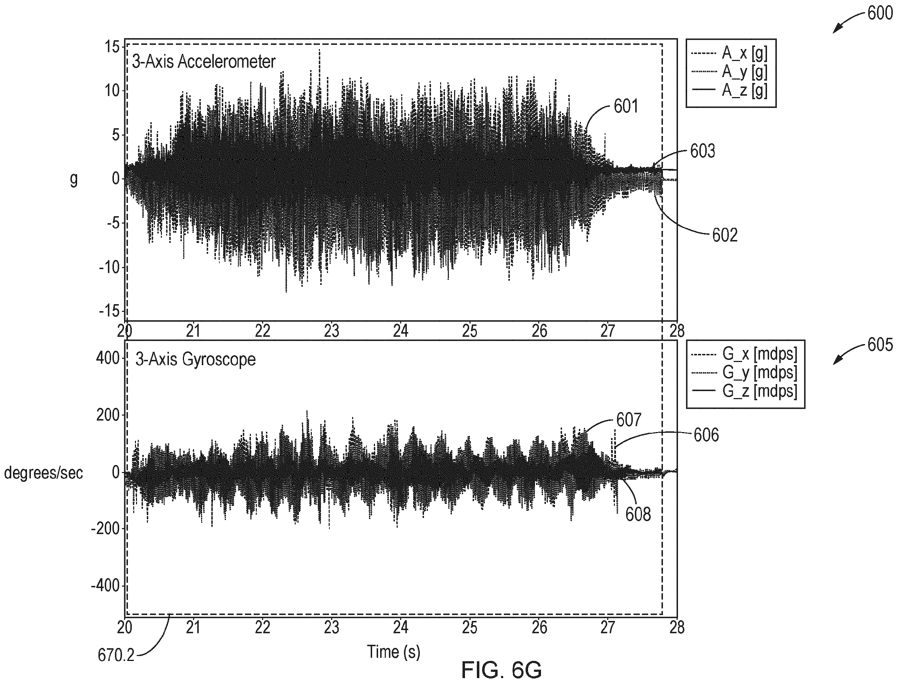

FIG. 6G depicts IMU sensor data plots 600, 605 for power tool 200 during operation of the tool in the light loaded operational state 670.2, in accordance with embodiments of the present disclosure. In this figure, acceleration data 601, 602, 603 are overlapped on a first plot and angular rate data 606, 607, 608 are overlapped on a second plot.

FIG. 6H depicts IMU sensor data plots 600, 605 for power tool 200 during operation of the tool in the light loaded operational state 670.2, in accordance with embodiments of the present disclosure. Here, acceleration data 601, 602, 603 are shown on three discrete plot lines and angular rate data 606, 607, 608 are shown on three discrete plot lines.

IMU sensor data plot 600 individually presents 3-axis acceleration data (g) over loaded operational state 670.2 including 1^{st} axis acceleration data 601, 2^{nd} axis acceleration data 602, and 3^{rd} axis acceleration data 603. IMU sensor data plot 605 individually presents 3-axis angular rate data (degrees / sec) over loaded operational state 670.2 including 1^{st} axis angular rate data 606, 2^{nd} axis angular rate data 607, and 3^{rd} axis angular rate data 608. The 3-axis angular rate data includes sinusoidal waveforms visible on the all three axes with a frequency (4 Hz) that aligns with user-induced movement, such as 3^{rd} axis angular rate data 608. Generally, the user-induced movement of power tool 200 (such as rhythmic tool oscillations) may be from 1 Hz to 5 Hz.

As shown here and previously described, during light loaded operational state 670.2, the peak absolute value of at least two axes of the acceleration data is in the range of approximately 8 to 12 g over a 50 ms window (see FIG. 6H, 1^{st} axis acceleration data 601 and 2^{nd} axis acceleration data 602). Filtering and processing the 3-axis acceleration data indicates sinusoidal behavior with a frequency that aligns with unloaded output shaft speed. The 3-axis angular rate date may include a similar frequency component, and the peak absolute value of at least one axis of the angular rate data is in the range of approximately 160 to 200 degrees/sec. Overall, the acceleration data and the angular rate data may include similar frequencies exhibited during the heavy loaded operational state 670.1, but with smaller overall amplitudes. This distinction may be determined as a difference between the peak absolute values, between the average amplitudes, between the RMS amplitude values, or as a function of an area of an envelope defined by the peak values.

Additionally, the 3-axis angular rate data exhibits a sinusoidal pattern visible on at least two axes with a second frequency component (4 Hz) that aligns with user-induced movement (see FIG. 6H, 3^{rd} axis angular rate data 608) commonly associated with a light grinding operation. Generally, the user-induced movement of power tool 200 (such as rhythmic tool oscillations) may be from 1 Hz to 5 Hz. Controller 160 may use any or all of this information to distinguish between light loaded operational state 670.2 and the other loaded operational states, such as heavy loaded operational state 670.1 and loaded operational state 670.3 (using an alternative grinding disc).

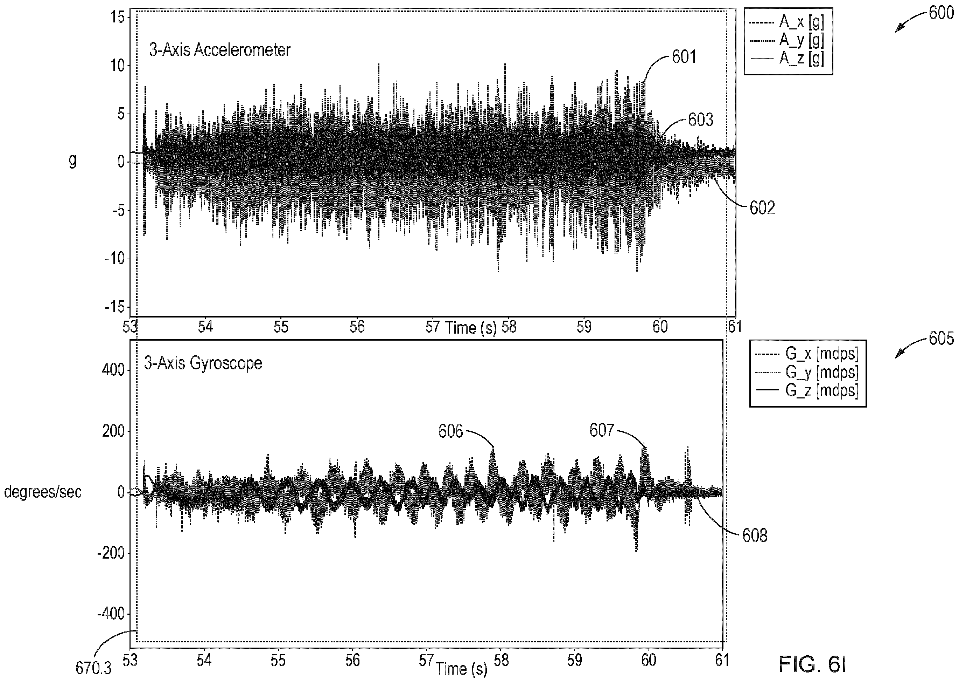

FIG. 6I depicts IMU sensor data plots 600, 605 for power tool 200 during operation of the tool in loaded operational state 670.3 (using an alternative grinding disc), in accordance with embodiments of the present disclosure. In this figure, acceleration data 601, 602, 603 are overlapped on a first plot and angular rate data 606, 607, 608 are overlapped on a second plot.

FIG. 6J depicts IMU sensor data plots 600, 605 for power tool 200 during operation of the tool in loaded operational state 670.3 (using an alternative grinding disc), in accordance with embodiments of the present disclosure. Here, acceleration data 601, 602, 603 are shown on three discrete plot lines and angular rate data 606, 607, 608 are shown on three discrete plot lines.

IMU sensor data plot 600 individually presents 3-axis acceleration data (g) over loaded operational state 670.3 including 1^{st} axis acceleration data 601, 2^{nd} axis acceleration data 602, and 3^{rd} axis acceleration data 603. IMU sensor data plot 605 individually presents 3-axis angular rate data (degrees / sec) over loaded operational state 670.3 including 1^{st} axis angular rate data 606, 2^{nd} axis angular rate data 607, and 3^{rd} axis angular rate data 608. The 3-axis angular rate data includes sinusoidal waveforms visible on the all three axes with a frequency (3 Hz) that aligns with user-induced movement, such as 3^{rd} axis angular rate data 608. Generally, the user-induced movement of power tool 200 (such as rhythmic tool oscillations) may be from 1 Hz to 5 Hz.

As shown here and previously described, during loaded operational state 670.3 (using an alternative grinding disc), the peak absolute value of at least two axes of the acceleration data is greater than 4 g but smaller than 8 g over a 50 ms window (see 1^{st} axis acceleration data 601 and 2^{nd} axis acceleration data 602). Filtering and processing the 3-axis acceleration data indicates sinusoidal behavior with a frequency that aligns with unloaded output shaft speed. The 3-axis angular rate date may include a similar frequency component. The peak absolute value of at least one axis of the angular rate data is smaller than 160 degrees/sec. Overall, the acceleration data and the angular rate data may include similar frequency components exhibited during loaded operational states 670.1 and 670.2, but with smaller overall amplitudes. This distinction may be determined as a difference between the peak absolute values, between the average amplitudes, between the RMS amplitude values, or as a function of an area of an envelope defined by the peak values.

Additionally, the 3-axis angular rate data further exhibits a sinusoidal pattern visible on at least two axes with a frequency (3 Hz) that aligns with user-induced movement (see FIG. 6J, 3^{rd} axis angular rate data 608) commonly associated with a flap disc grinding operation. This behavior is distinct from the user-induced movement exhibited when using the grinding disc during loaded operational states 670.1 and 670.2 and includes a more refined sinusoidal behavior along at least one of the axes. Generally, the user-induced movement of power tool 200 (such as rhythmic tool oscillations) may be from 1 Hz to 5 Hz. Controller 160 may use any or all of this information to distinguish between loaded operational state 670.3 (using an alternative grinding disc) and the other loaded operational states, such as heavy loaded operational state 670.1 and light loaded operational state 670.2. In other words, one or both of the frequency and/or an amplitude profile (i.e., formed by the absolute peak of the waveform with the highest amplitude, the sum of the three axes waveform, the RMS values, etc.) of one or both of the acceleration data and/or the angular rate data can be used by controller 160 to distinguish between type of grinding operation (i.e., the type of disc utilized for the operation). In an example, controller 160 may detect the grinding operation, classify the grinding operation into one of a preset number of grinding operation types (e.g., in this example, grinding operation versus flap operation), and wirelessly communicate the classification.

Referring back to FIGS. 6A and 6B, it is noted that the accelerometer and angular rate data exhibit spikes between loaded operational states 670.2 and 670.3 (i.e., at approximately 28 seconds and again at approximately 50 seconds). This behavior is associated with the operator dismounting the existing grinding disc from the power tool and mounting a flap disc in its place. In an embodiment, controller 160 may detect this behavior between loaded operational states and use it for an additional data point for determination of whether a new accessory has been mounted onto the power tool.

Comparing FIGS. 5A to 5F and FIGS. 6A to 6J, it is further noted that there are several discernable differences between the acceleration and/or angular rate profiles of power tool 100 (impact wrench) and power tool 200 (angle grinder). These differences can be identified by controller 160 during tool usage to identify the type of power tool to which the auxiliary wireless device 150 is coupled. For example, power tool 200 exhibits a significantly higher acceleration and angular rate frequency associated with the higher output speed of an angle grinder. By contrast, power tool 100 exhibits a higher amplitude (i.e., in terms of the absolute peak, the sum of the 3-axes amplitudes, or the RMS value) associated with the higher vibration levels seen in impacting operations as compared to than grinding operations. These examples highlight only some of the differences between the acceleration and/or angular rate profiles of power tools 100 and 200 that can be detected by controller 160 to identify the type of power tool to which the auxiliary wireless device 150 is coupled. This arrangement is particularly beneficial where the auxiliary wireless device 150 does not have a direct connection (e.g., via SCU 166 or WCU 164) to the power tool to obtain an identification information of the power tool.

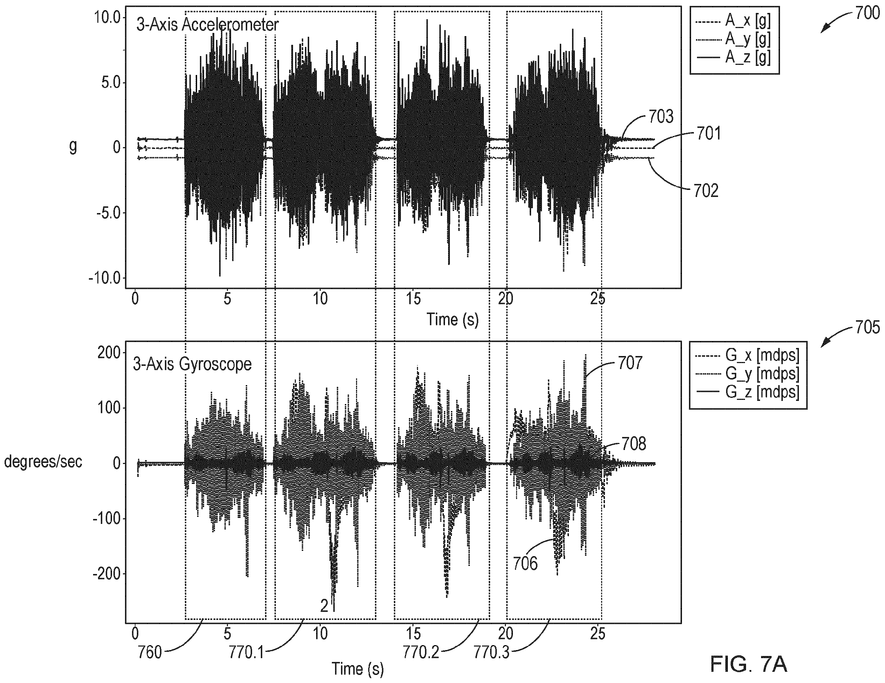

FIGS. 7A to 7G depict IMU sensor data plots 700, 705 for power tool 300 depicted in FIGS. 3A, 3B, 3C, in accordance with embodiments of the present disclosure. As discussed above, IMU sensor data may be used to determine power tool information, such as operational state, operational time, cumulative operational time, operational parameters, etc. Data plots 700 depict 3-axis acceleration data for power tool 300 during an active non-cutting operational state and three cutting operational states will be similar to the data presented for power tool 100 in data plots 500. Similarly, data plots 705 depict 3-axis angular rate data for power tool 300 during the active non-cutting and three cutting operational states will be similar to the data presented for power tool 100 in data plots 505. The active non-cutting operational state occurs when trigger 311 is pressed and the electric motor is operating but accessory 302 (such as a cutting blade) is not cutting a workpiece (such as lumber material).

Power tool 300, which in this example is a miter saw, is utilized herein to highlight capabilities of controller 160 to identify operations of a power tool based predominantly on a detection of a predetermined motion by the power tool. In particular, a miter saw is a stationary tool includes a heavy cutting accessory performing repeated cutting operations on a workpiece (such as lumber material). Generally, due to the high inertia of the cutting blade, the vibration profiles between a cutting operational state and the active non-cutting operational state may be discernible. However, the angular rate data can reliably be used to detect a cutting operation that includes a downward movement of the output accessory 302 followed by an upward movement of the output accessory 302. Controller 160 can use this information to identify and keep count of cutting operations performed by power tool 300, as discussed below in detail. Further highlighted below are capabilities of controller 160 to identify the type of power tool to which the auxiliary wireless device 150 is coupled, in this case, a stationary versus a portable power tool, and particularly, a power tool that is configured to conduct operations in a predictable and repeated pattern (e.g., a miter saw) versus other types of power tools. Various characteristics of these data are discussed below.

FIG. 7A depicts IMU sensor data plots 700, 705 for power tool 300 (miter saw) during operations of the tool in active non-cutting and cutting operational states, in accordance with embodiments of the present disclosure.

IMU sensor data plot 700 presents 3-axis acceleration data (g) over time (about 20 seconds) including 1^{st} axis acceleration data 701, 2^{nd} axis acceleration data 702, and 3^{rd} axis acceleration data 703. IMU sensor data plot 705 presents 3-axis angular rate data (degrees / sec) over time (about 20 seconds) including 1^{st} axis angular rate data 706, 2^{nd} axis angular rate data 707, and 3^{rd} axis angular rate data 708. In this figure, acceleration data 701, 702, 703 are overlapped on a first plot and angular rate data 706, 707, 708 are overlapped on a second plot.

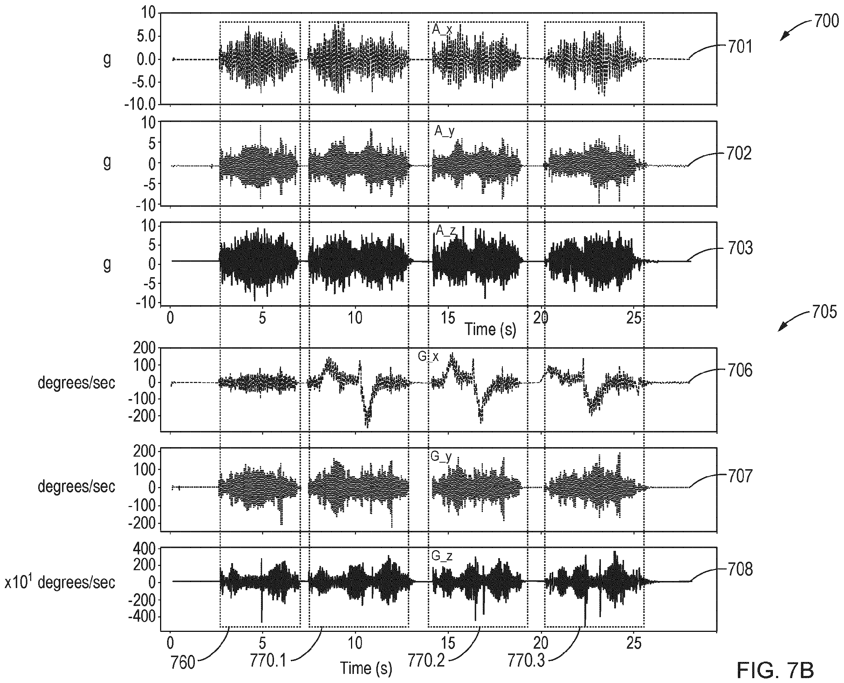

FIG. 7B depicts IMU sensor data plots 700, 705 for power tool 300 during operations of the tool in active non-cutting and cutting operational states, in accordance with embodiments of the present disclosure.

Plots 700, 705 reflect IMU sensor data corresponding to the operation of power tool 300 operating in known operational states over 20 seconds, including active non-cutting operational state 760, and three subsequent cutting operational states 770.1, 770.2, and 770.3. Active non-cutting operational state 760 may also be known as an unloaded operational state.

During active non-cutting operational state 760, trigger 311 is activated and the miter saw 370 is held in the first position with output accessory 302 (cutting blade) attached. The associated operational time 761 is about 4 seconds in this example, at the end of which the trigger 331 is released. At the beginning of each cutting operational state 770.1, trigger 311 is activated with output accessory 102 (cutting blade) attached, and miter saw 370 is rotated from the first position to the second position to engage the workpiece (2x4 SPF board). After the workpiece is cut, the miter saw 370 is rotated back to the first position, trigger 311 is released (deactivated), and the electric motor and output accessory 302 were allowed to coast down or brake to a stop. While the operational time 771.1 is about 5 seconds for the entire operation in this example, the actual cutting time is about 1 second and the associated unloaded operational time for moving the blade into engagement with the workpiece and back in its first position is about 4 seconds in this example.

The 3-axis acceleration data and the 3-axis angular rate data provide insights into the acceleration and angular rate environments of power tool 300 during the known operational states.

During active non-cutting operational state 760 and cutting operational states 770.1, 770.2, 770.3, the vibration profile as indicated by the 3-axis acceleration data starts at approximately 0 g at trigger pull, reaches a peak of greater than approximately 3 g on at least two axes, and drops back down to approximately 0 g upon trigger release. Since the load exerted on the cutting accessory, which is often lumber material, is insignificant in comparison to the inertia of the cutting blade, no significant difference is seen on the signature of the acceleration data profile. However, the 3-axis angular rate data includes a distinct signature on one axis that aligns with user-induced actuation of the output accessory 302 of the miter saw 370 from the first position, to the second position, and back to the first position. In this example, this distinct signature can be seen on the 1 ^{nd} axis angular rate data 706, though it should be understood that depending on the orientation of the auxiliary wireless device 150, this signature might be seen on other axes or on more than a single axis. As will be discussed in detail later, controller 160 can be configured to detect this signature on the angular rate data and detect a cutting operation accordingly.

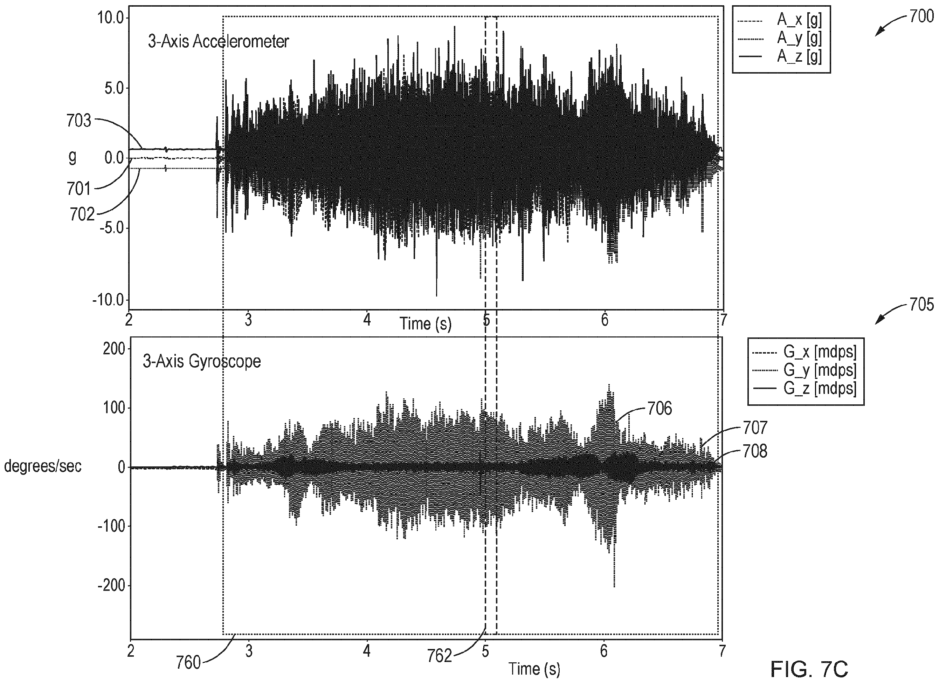

FIG. 7C depicts IMU sensor data plots 700, 705 for power tool 300 during operation of the tool in the active non-cutting operational state, in accordance with embodiments of the present disclosure.

IMU sensor data plot 700 presents 3-axis acceleration data (g) over active non-cutting operational state 760 including 1^{st} axis acceleration data 701, 2^{nd} axis acceleration data 702, and 3^{rd} axis acceleration data 703. IMU sensor data plot 705 presents 3-axis angular rate data (degrees / sec) over active non-cutting operational state 760 including 1^{st} axis angular rate data 706, 2^{nd} axis angular rate data 707, and 3^{rd} axis angular rate data 708.

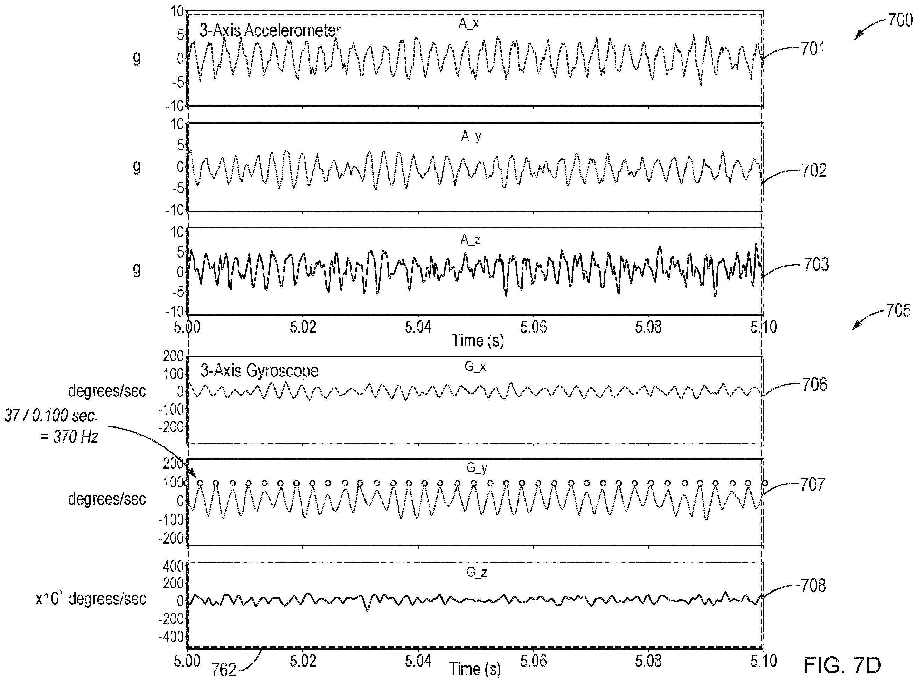

An example partial active non-cutting operational state window 762 (over about 0.10 seconds) is also identified to provide a zoomed-in and detailed view of the IMU sensor data plot in the active non-cutting operational state in the next figure (FIG. 7D). As shown here, during active non-cutting operational state 760, the peak absolute value of at least two axes of the acceleration data is greater than approximately 4 g over a 50 ms window. The 3-axis angular rate data similarly exhibits a peak absolute value of greater than 500 degrees/sec on at least one axes. Controller 160 may determine the trigger pull and release events based on one or both of the acceleration and angular rate data. However, the angular rate data does not exhibit a movement signature association with downward and upward movement of the output accessory 302 of the miter saw 370 from the first position, to the second position, and back to the first position. Thus, controller 160 does not detect a cut having been performed during this operational state.

FIG. 7D depicts IMU sensor data plots 700, 705 for power tool 300 during operation of the tool in the partial active non-cutting operational state within the window 762, in accordance with embodiments of the present disclosure.

IMU sensor data plot 700 individually presents 3-axis acceleration data (g) over partial active non-cutting operational state window 762 including 1^{st} axis acceleration data 701, 2^{nd} axis acceleration data 702, and 3^{rd} axis acceleration data 703. IMU sensor data plot 705 individually presents 3-axis angular rate data (degrees / sec) over partial active non-cutting operational state window 762 including 1^{st} axis angular rate data 706, 2^{nd} axis angular rate data 707, and 3^{rd} axis angular rate data 708. Filtering and processing the 3-axis acceleration data indicates sinusoidal behavior with a frequency (370 Hz) that aligns with an unloaded output shaft speed (22,000 rpm). Furthermore, the 3-axis angular rate data includes sinusoidal waveforms visible on all three axes with a frequency (370 Hz) that aligns with an unloaded output shaft speed (22,000 rpm). This is best shown on the 2^{nd} axis angular rate data 707. Controller 160 may use this information to estimate the output speed of the miter saw. In addition, this information may be used, alone or in combination with the accelerometer and gyroscope signatures during active non-cutting operational state 760 and/or the cutting operational states 770.1, 770.2, 770.3, to identify the type of power tool to which the auxiliary wireless device 150 is coupled.

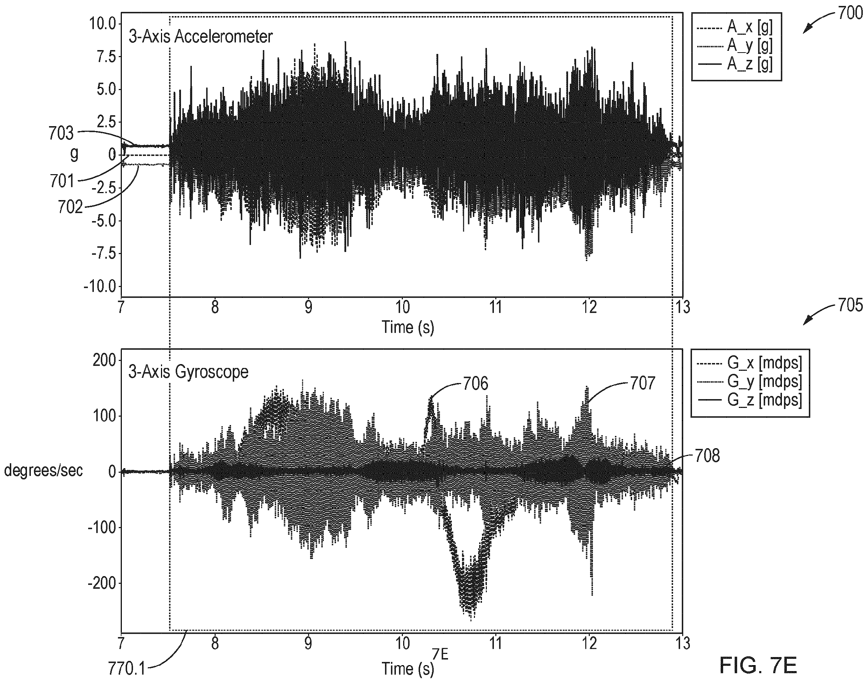

FIG. 7E depicts IMU sensor data plots 700, 705 for power tool 300 during the cutting operational state 770.1, in accordance with embodiments of the present disclosure. In this figure, acceleration data 601, 602, 603 are overlapped on a first plot and angular rate data 606, 607, 608 are overlapped on a second plot.

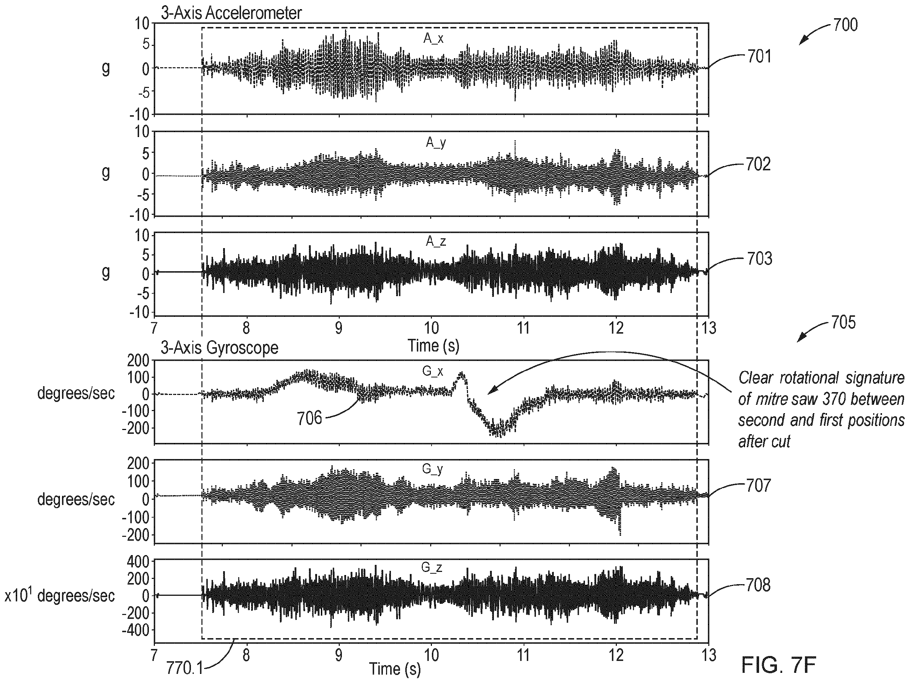

FIG. 7F depicts IMU sensor data plots 700, 705 for power tool 300 during the cutting operational state 770.1, in accordance with embodiments of the present disclosure. Here, acceleration data 701, 702, 703 are shown on three discrete plot lines and angular rate data 706, 707, 708 are shown on three discrete plot lines.

IMU sensor data plot 700 individually presents 3-axis acceleration data (g) over loaded operational state 770.1 including 1^{st} axis acceleration data 701, 2^{nd} axis acceleration data 702, and 3^{rd} axis acceleration data 703. IMU sensor data plot 705 individually presents 3-axis angular rate data (degrees / sec) over loaded operational state 770.1 including 1^{st} axis angular rate data 706, 2^{nd} axis angular rate data 707, and 3^{rd} axis angular rate data 708. As previously discussed, the 1^{st} axis angular rate data 706 has a distinct rotational signature that aligns with user-induced rotation of the miter saw 370 from the first position, to the second position, and back to the first position. The details of this signature are discussed below in detail.

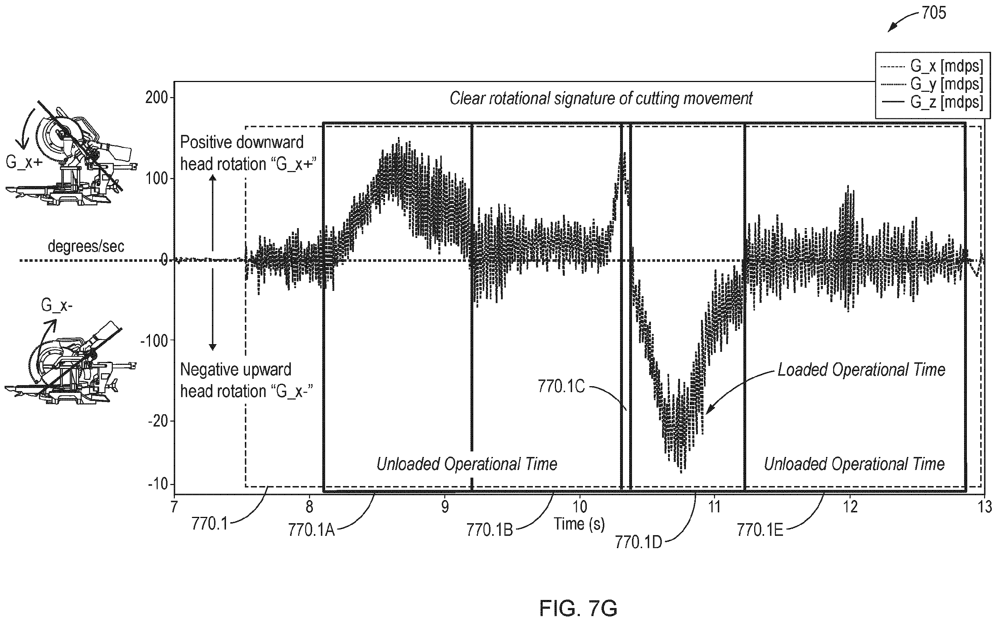

FIG. 7G depicts IMU sensor data plot 705 for power tool 300 during the cutting operational state 770.1, in accordance with embodiments of the present disclosure.

IMU sensor data plot 705 individually presents 1^{st} axis angular rate data 706 (degrees / sec) over cutting operational state 770.1. Trigger 311 is activated at the beginning of cutting operational state 770.1. During zone 770.1A, miter saw 370 positively rotates about pivot axis 374 at a certain rate and the pivoting motion slows down as output accessory 302 (cutting blade) approaches the workpiece. This is a transition from the first position to the second position. During zone 770.1B, miter saw 370 positively rotates about pivot axis 374 at a slow rate while material is being cut and removed from the workpiece. During zone 770.1C, miter saw 370 positively rotates about pivot axis 374 at a faster rate for a short duration as output accessory 302 briefly over-travels after the cut is complete. During zone 770.1D, miter saw 370 negatively rotates about pivot axis 374 at a certain rate as the user pulls miter saw 370 towards the second position. During zone 770.1E, miter saw 370 is stationary while trigger 311 is released and the electric motor and output accessory 302 coast down or brake to a stop.

Controller 160 may be configured to detect a cutting operation based on at least detection of one or more of zones 770.1A to 770.1E in the angular rate data during an operation of miter saw 370. Controller 160 may further be configured to detect an abnormality in a cutting operation based on at least one of zones 770.1A to 770.1E not conforming to the prescribed signature. For example, if the signature of zone 770.1C is not observed during a cutting operation, controller 160 may determine that the cut was not made all the way through. Similarly, if miter saw 370 does not return to its original position immediately after a cut, controller 160 may determine a mechanical problem with the miter saw.

Controller 160 may also be configured to detect the size of the material being cut based on the travel distance of the output accessory 302. This may be determined based on, e.g., the peak value of the angular rate data in zones 770.1B and/or 770.1D, which may be greater for a larger workpiece (e.g., a 4x4 pressure treated lumber) than a smaller workpiece (e.g., 2x4 lumber).

Controller 160 may also be configured to determine the health of the cutting blade based on the IMU data. For example, if the acceleration data exhibits too much vibration during a cutting operation, or if the slope of the angular rate distinct rotational signature is too slow during cutting, controller 160 may determine that the blade is worn out and requires replacement.

Any of the above information may be communicated wirelessly by controller 160.

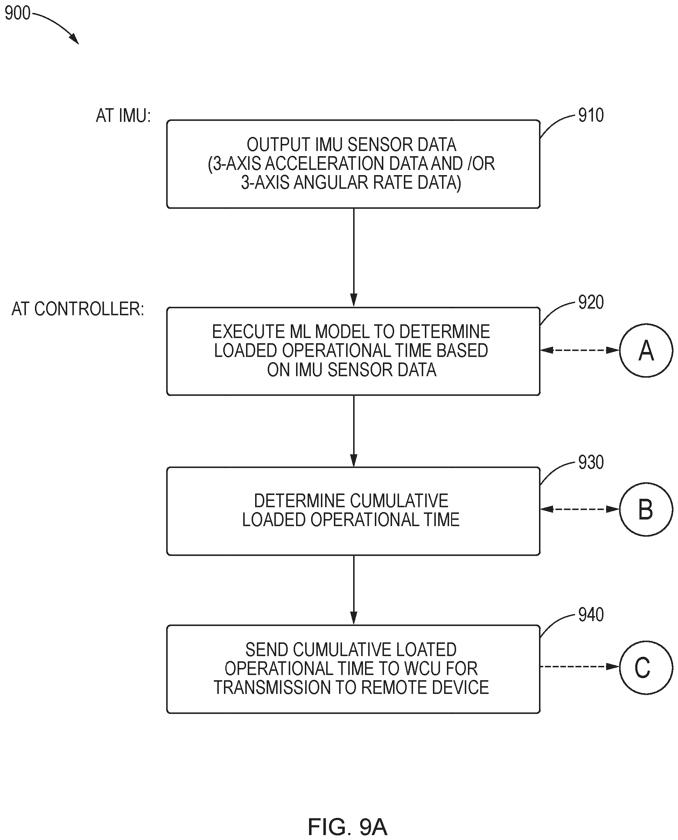

Generally, determining power tool operational information may be accomplished using rules-based techniques and/or ML-based techniques. FIGS. 8A to 8D depict rules-based techniques for determining power tool operational information, while FIGS. 9A to 9E depict ML-based techniques for determining power tool operational information.

FIGS. 8A to 8D depict flow charts illustrating rules-based functionality associated with IMU 168 and auxiliary wireless device 150 for determining power tool operational information, in accordance with embodiments of the present disclosure.

FIG. 8A depicts flow chart 800 illustrating functionality associated with IMU 168 and auxiliary wireless device 150 for determining loaded operational time and cumulative loaded operational time for a power tool, in accordance with embodiments of the present disclosure.

As described above, auxiliary wireless device 150 may be mounted within a pocket of the power tool housing (such as pocket 240, etc.) or within an auxiliary housing mounted to the power tool housing (such as auxiliary housing 140, etc.). Other mounting configurations for auxiliary wireless device 150 are also supported.

Generally, controller 160 may determine power tool information continuously (such as executing a continuous or endless processing loop), periodically (such as every 1 second, 5 seconds, every 10 seconds, etc.), based on a user-defined schedule communicated to auxiliary wireless device 150 over network 410 from tool monitoring device 420 or tool monitoring system 430, in response to an event (such as activation or deactivation of trigger 111, 211, 311, etc.), etc. Similarly, IMU 168 may output IMU sensor data continuously, periodically, in response to a request received from controller 160, etc.

In certain embodiments, the microcontroller or microprocessor of IMU 168 may be configured to perform the functionality described for controller 160.

At 810, IMU 168 outputs IMU sensor data that includes at least one of 3-axis acceleration data and 3-axis angular rate data.

As discussed above, controller 160 may be configured to determine power tool information based on both 3-axis acceleration data and 3-axis angular rate data, or, alternatively, based on either 3-axis acceleration data or 3-axis angular rate data. Accordingly, IMU 168 may be configured to output IMU sensor data that includes 3-axis acceleration data and 3-axis angular rate data to controller 160. Alternatively, IMU 168 may be configured to output IMU sensor data that includes either 3-axis acceleration data or 3-axis angular rate data based on the processing methodology of controller 160.

At 820, controller 160 determines a loaded operational time of power tool 400 over a time period based on the IMU sensor data.

Generally, controller 160 processes the 3-axis angular rate data and/or the 3-axis angular rate data over the time period to determine the operational state and operational time of power tool 400 during that time period. The time period may be less than 1 second in order to capture frequent power tool activations and loadings of shorter durations. Conversely, the time period may be longer than 1 second to capture infrequent power tool activations and loadings of longer durations. Generally, the time period may accommodate activation and loading events and durations of those power tools of interest.

In certain embodiments, controller 160 may determine a loaded operational time of the power tool over the time period based on 3-axis acceleration data. Controller 160 determines, based on the 3-axis acceleration data, a peak absolute acceleration (PAA) for each axis over the time period, and then compares the PAA for each axis to a first acceleration threshold (such as 2 g, 3 g, 6 g, etc.). When the PAA for at least two axes are greater than the first acceleration threshold, controller 160 sets the loaded operational time of the power tool to the time period (such as 1 second, etc.). In other words, the power tool was in the loaded operational state during the time window. Conversely, when the PAA for at least two axes are not greater than the first acceleration threshold, controller 160 sets the loaded operational time of the power tool to zero. In other words, the power tool was not in a loaded operational state during the time window.

In other embodiments, controller 160 may determine an APAA for all 3 axes by summing the PAA for each axis over the time period. Controller 160 may then compare the APAA to an aggregate acceleration threshold that is greater than the first acceleration threshold. When the APAA is greater than the aggregate acceleration threshold, controller 160 sets the loaded operational time of the power tool to the time period (such as 1 second, etc.). Conversely, when the APAA is not greater than the aggregate acceleration threshold, controller 160 sets the loaded operational time of the power tool to zero.

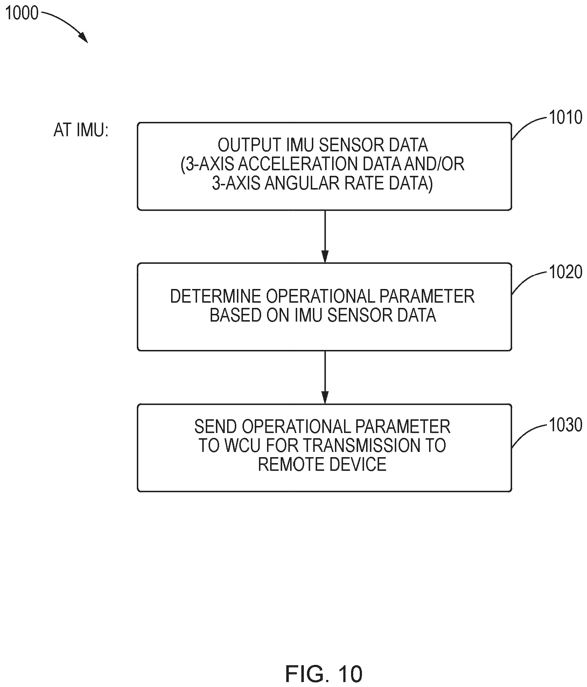

The first acceleration threshold may be associated with the type of power tool, and may be different for different types of power tools. In certain embodiments, controller 160 may determine the type of power tool from IMU sensor data acquired after auxiliary wireless device 150 has been mounted to the power tool (FIG. 10). In other embodiments, controller 160 may receive information indicative of the type of power tool from tool monitoring device 420 (over network 410 or a direct Bluetooth connection), from tool monitoring system 430 (over network 410), etc. After the type of power tool has been determined, controller 160 then determines the particular thresholds that are associated with that type of power tool, such as the first acceleration threshold described above, the second and third acceleration thresholds described below, the angular rate threshold described below, as well as the first and second frequencies described below, etc.

In certain embodiments, controller 160 may determine a loaded operational time of the power tool over a time period based on 3-axis angular rate data. Controller 160 determines, based on the 3-axis angular rate data, a peak absolute angular rate (PAAR) for each axis over the time period, and then compares the PAAR for each axis to an angular rate threshold (such as 0.2 degrees/sec, etc.). When the PAAR for at least one axis is greater than the angular rate threshold and the 3-axis angular rate data for at least one axis is sinusoidal with the angular rate frequency, controller 160 sets the loaded operational time of the power tool to the time period (such as 1 second). In other words, the power tool was in the loaded operational state during the time window. Conversely, when the PAAR for at least one axis is less than the angular rate threshold and the 3-axis angular rate data for at least one axis is not sinusoidal with the angular rate frequency, controller 160 sets the loaded operational time of the power tool to zero. In other words, the power tool was not in a loaded operational state during the time window. The angular rate frequency is related to user-induced movement of the power tool, and may be between 1 Hz and 5 Hz.

In other embodiments, controller 160 may determine an APAAR for all 3 axes by summing the PAAR for each axis over the time period. Controller 160 may then compare the APAAR to an aggregate angular rate threshold that is greater than the angular rate threshold. When the APAAR is greater than the aggregate angular rate threshold, controller 160 sets the loaded operational time of the power tool to the time period (such as 1 second, etc.). Conversely, when the APAAR is not greater than the aggregate angular rate threshold, controller 160 sets the loaded operational time of the power tool to zero.

In certain embodiments, controller 160 may determine a loaded operational time of the power tool over a time period based on 3-axis acceleration data and 3-axis angular rate data by combining the acceleration thresholds, angular rate threshold, angular rate frequencies and comparison tests.

At 830, controller 160 may determine a cumulative loaded operational time of the power tool based on loaded operational times within a cumulative time period.

For example, at 830, controller 160 repeats the determination of the loaded operational time (at 820) for the number of time periods that are within the cumulative time period. Controller 160 then accumulates (sums) the number of loaded operational times to determine the cumulative loaded operational time. In certain embodiments, the value of the cumulative time period may be a multiple of the value of the time period. In one example, the time period may be 1 second, the cumulative time period may be 60 seconds, and the power tool was activated in a loaded condition during 20 time periods (i.e., loaded operational state). In this example, each loaded operational time is 1 second, and the cumulative loaded operational time is 20 seconds.

At 840, controller 160 may send the cumulative loaded operational time to WCU 164 for transmission to a remote device.

WCU 164 may send a message over network 410 (or a direct Bluetooth connection) to tool monitoring device 420. Similarly, WCU 164 may send a message over network 410 to tool monitoring system 430, which may provide a power tool inventory and operational database for security, maintenance, and other purposes.

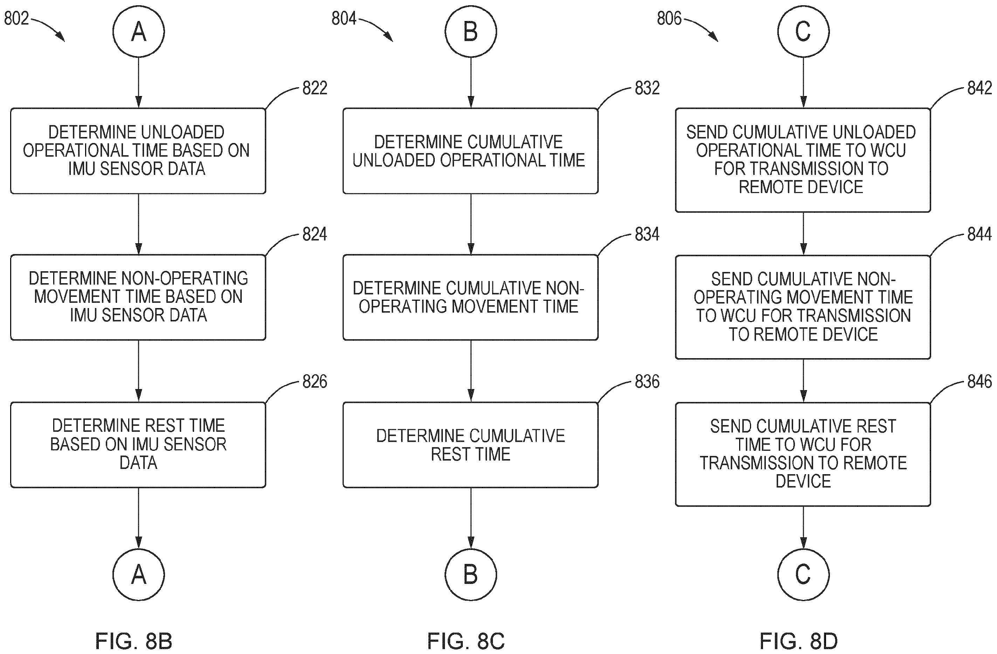

FIG. 8B depicts flow chart 802 illustrating functionality associated with auxiliary wireless device 150for determining unloaded operational time, non-operating movement time and rest time for a power tool, in accordance with embodiments of the present disclosure.

After controller 160 determines the loaded operational time of the power tool for a time period (at 820 in FIG. 8A), flow may proceed to 822 through "A."

At 822, controller 160 may determine an unloaded operational time of the power tool over the time period.

In certain embodiments, controller 160 may determine the unloaded operational time of the power tool over the time period based on 3-axis acceleration data. Controller 160 compares the PAA for each axis to a second acceleration threshold (such as 2 g, 4 g, etc.) that is less than the first acceleration threshold. When the PAA for at least two axes are less than the first acceleration threshold and greater than the second acceleration threshold, controller 160 sets the unloaded operational time of the power tool to the time period (such as 1 second, etc.). In other words, the power tool was in the unloaded operational state during the time window. Conversely, when the PAA for at least two axes are not less than the first acceleration threshold and greater than the second acceleration threshold, controller 160 sets the unloaded operational time of the power tool to zero. In other words, the power tool was not in an unloaded operational state during the time window. The second acceleration threshold may be associated with the type of power tool, and may be different for different types of power tools, as discussed above.

In certain embodiments, controller 160 may determine the unloaded operational time of the power tool over the time period based on 3-axis angular rate data. Controller 160 compares the PAAR for each axis to the angular rate threshold. When the PAAR for at least one axis is greater than the angular rate threshold and the 3-axis angular rate data for at least one axis is sinusoidal with a second angular rate frequency, controller 160 sets the loaded operational time of the power tool to the time period (such as 1 second, etc.). In other words, the power tool was in the unloaded operational state during the time window. Conversely, when the PAAR for at least one axis is less than the angular rate threshold and the 3-axis angular rate data for at least one axis is not sinusoidal with the angular rate frequency, controller 160 sets the loaded operational time of the power tool to zero. In other words, the power tool was not in a loaded operational state during the time window. The angular rate frequency is related to user-induced movement of the power tool, and may be between 1 Hz and 5 Hz.

In certain embodiments, controller 160 may determine an unloaded operational time of the power tool over a time period based on 3-axis acceleration data and 3-axis angular rate data by combining the acceleration thresholds, angular rate threshold, angular rate frequencies and comparison tests.

At 824, controller 160 may determine a non-operating movement time of the power tool over the time period.

In certain embodiments, controller 160 compares the PAA for each axis to a third acceleration threshold (such as 1 g, 2 g, etc.) that is less than the second acceleration threshold. When the PAA for at least one axis is less than the second acceleration threshold and greater than the third acceleration threshold, controller 160 sets the non-operating movement time of the power tool to the time period (such as 1 second, etc.). In other words, the power tool was in the non-operating movement state during the time window. Conversely, when the PAA for at least one axis is not less than the second acceleration threshold and greater than the third acceleration threshold, controller 160 sets the non-operating movement time of the power tool to zero. In other words, the power tool was not in a non-operating movement state during the time window. The third acceleration threshold may be associated with the type of power tool, and may be different for different types of power tools, as discussed above.

At 826, controller 160 may determine a rest time of the power tool over the time period.

In certain embodiments, controller 160 compares the PAA for each axis to the third acceleration threshold. When the PAA for each axis are less than the third acceleration threshold, controller 160 sets the rest time of the power tool to the time period (such as 1 second, etc.). In other words, the power tool was in the rest state during the time window.

Flow may then return to 830 through "A" (FIG. 8A).

FIG. 8C depicts flow chart 804 illustrating functionality associated with auxiliary wireless device 150 for determining cumulative unloaded operational time, cumulative non-operating movement time and cumulative rest time for a power tool, in accordance with embodiments of the present disclosure.

After controller 160 determines a cumulative loaded operational time of the power tool based on loaded operational times within a cumulative time period (at 830 in FIG. 8A), flow may proceed to 832 through "B."

At 832, controller 160 may determine a cumulative unloaded operational time of the power tool based on unloaded operational times within the cumulative time period.

Controller 160 repeats the determination of the unloaded operational time (at 822) for the number of time periods that are within the cumulative time period. Controller 160 then accumulates (sums) the number of unloaded operational times to determine the cumulative unloaded operational time.

At 834, controller 160 may determine a cumulative non-operating movement time of the power tool based on non-operating movement times within the cumulative time period.

Controller 160 repeats the determination of the non-operating movement time (at 824) for the number of time periods that are within the cumulative time period. Controller 160 then accumulates (sums) the number of non-operating movement times to determine the cumulative non-operating movement time.

At 834, controller 160 may determine a cumulative rest time of the power tool based on rest times within the cumulative time period.

Controller 160 repeats the determination of the rest time (at 826) for the number of time periods that are within the cumulative time period. Controller 160 then accumulates (sums) the number of rest times to determine the cumulative rest time.

Flow may then return to 840 through "B" (FIG. 8A).

FIG. 8D depicts flow chart 806 illustrating functionality associated with auxiliary wireless device 150 for sending cumulative unloaded operational time, cumulative non-operating movement time and cumulative rest time for a power tool to a remote device, in accordance with embodiments of the present disclosure.

After controller 160 sends the cumulative loaded operational time to WCU 164 for transmission to a remote device (at 840 in FIG. 8A), flow may proceed to 842 through "C."

At 842, controller 160 may send the cumulative unloaded operational time to the WCU for transmission to the remote device.

At 844, controller 160 may send the cumulative non-operating movement time to the WCU for transmission to the remote device.

At 846, controller 160 may send the cumulative rest time to the WCU for transmission to the remote device.

FIGS. 9A to 9D depict flow charts illustrating ML-based functionality associated with IMU 168 and auxiliary wireless device 150 for determining power tool operational information, in accordance with embodiments of the present disclosure.

FIG. 9A depicts flow chart 900 illustrating functionality associated with IMU 168 and auxiliary wireless device 150 for determining loaded operational time and cumulative loaded operational time for a power tool, in accordance with embodiments of the present disclosure.

At step 910, IMU 168 outputs IMU sensor data that includes at least one of 3-axis acceleration data and 3-axis angular rate data (similar to 810).

At step 920, controller 160 executes an ML model to determine a loaded operational time of the power tool over a time period based on the IMU sensor data.

In certain embodiments, controller 160 provides 3-axis acceleration data and/or 3-axis angular rate data over the time period to the ML model. In one example, the ML model is a recursive neural network (RNN) that has been trained to take, as input, time series 3-axis acceleration data and/or input time series 3-axis angular rate data, and then predict the loaded operational state of the power tool based on the 3-axis acceleration data and/or the 3-axis angular rate data. The ML model may provide a simple binary classification, such as true (or 1) for a loaded operational state, and false (or 0) for any other operational state. When the prediction is true, controller 160 sets the loaded operational time of the power tool to the time period (such as 1 second, etc.). In other words, the power tool was in the loaded operational state during the time window. Conversely, when the prediction is false, controller 160 sets the loaded operational time of the power tool to zero. In other words, the power tool was not in a loaded operational state during the time window.

In certain embodiments, the microcontroller or microprocessor of IMU 168 may execute the ML model, and provide the predicted loaded operational state to controller 160.

At step 930, controller 160 may determine a cumulative loaded operational time of the power tool based on loaded operational times within a cumulative time period.

Controller 160 repeats the determination of the loaded operational time (at 920) for the number of time periods that are within the cumulative time period. Controller 160 then accumulates (sums) the number of loaded operational times to determine the cumulative loaded operational time. In certain embodiments, the value of the cumulative time period may be a multiple of the value of the time period. In one example, the time period may be 1 second, the cumulative time period may be 60 seconds, and the power tool was activated in a loaded condition during 20 time periods (i.e., loaded operational state). In this example, each loaded operational time is 1 second, and the cumulative loaded operational time is 20 seconds.

At step 940, controller 160 may send the cumulative loaded operational time to WCU 164 for transmission to a remote device.

WCU 164 may send a message over network 410 (or, e.g., a direct Bluetooth connection) to tool monitoring device 420. Similarly, WCU 164 may send a message over network 410 to tool monitoring system 430, which may provide a power tool inventory and operational database for security, maintenance, and other purposes.

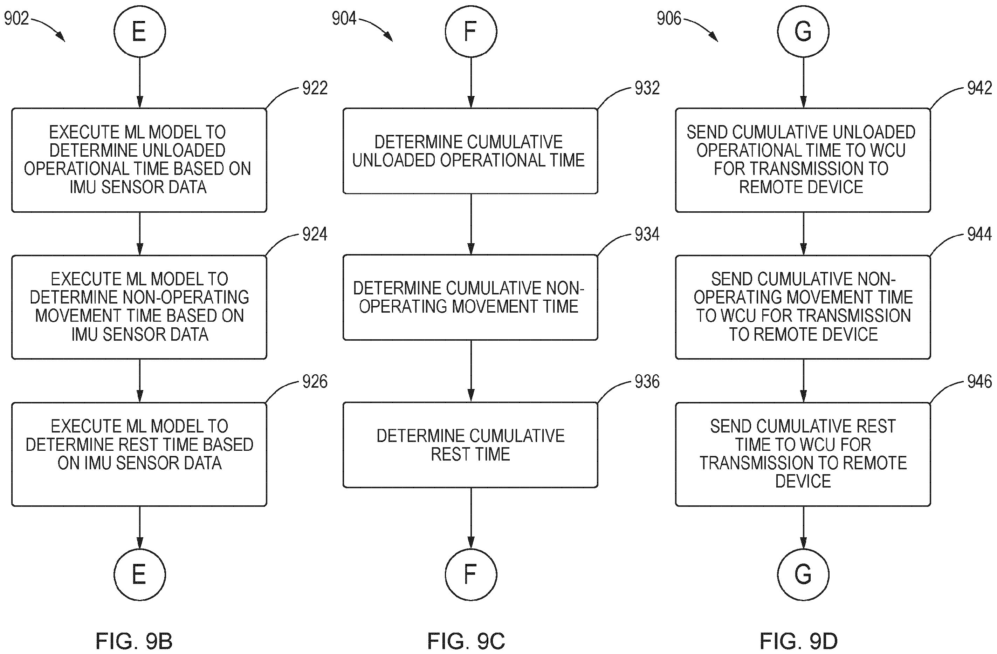

FIG. 9B depicts flow chart 902 illustrating functionality associated with auxiliary wireless device 150 for determining unloaded operational time, non-operating movement time and rest time for a power tool, in accordance with embodiments of the present disclosure.

After controller 160 determines the loaded operational time of power tool 400 for a time period (at 920 in FIG. 9A), flow may proceed to 922 through "D."

At step 922, controller 160 may determine an unloaded operational time of the power tool over the time period.

In another example, an ML model (e.g., an RNN) is trained to take, as input, time series 3-axis acceleration data and/or input time series 3-axis angular rate data, and then predict the unloaded operational state of the power tool based on the 3-axis acceleration data and/or the 3-axis angular rate data. The ML model may provide a simple binary classification, such as true (or 1) for an unloaded operational state, and false (or 0) for any other operational state. When the prediction is true, controller 160 sets the unloaded operational time of the power tool to the time period (such as 1 second, etc.). In other words, the power tool was in the unloaded operational state during the time window. Conversely, when the prediction is false, controller 160 sets the unloaded operational time of the power tool to zero. In other words, the power tool was not in an unloaded operational state during the time window.

In certain embodiments, the microcontroller or microprocessor of IMU 168 may execute the ML model, and provide the predicted unloaded operational state to controller 160.

At step 924, controller 160 may determine a non-operating movement time of the power tool over the time period.

In another example, an ML model (such as an RNN, etc.) is trained to input time series 3-axis acceleration data and/or input time series 3-axis angular rate data, and then predict the non-operating movement state of the power tool based on the 3-axis acceleration data and/or the 3-axis angular rate data. The RNN may provide a simple binary classification, such as true (or 1) for a non-operating movement state, and false (or 0) for any other operational state. When the prediction is true, controller 160 sets the non-operating movement time of the power tool to the time period (such as 1 second, etc.). In other words, the power tool was in the non-operating movement state during the time window. Conversely, when the prediction is false, controller 160 sets the non-operating movement time of the power tool to zero. In other words, the power tool was not in a non-operating movement state during the time window.

In certain embodiments, the microcontroller or microprocessor of IMU 168 may execute the ML model, and provide the predicted non-operating movement state to controller 160.

At step 926, controller 160 may determine a rest time of the power tool over the time period.

In certain embodiments, steps 920, 922, 924, and 926 may be collapsed into a single execution of ML model, which will determine whether the power tool was in the loaded operational state, the unloaded operational state, the non-operating movement state, or the rest state during each time window. In one example, an ML model may provide a class prediction, which would include a loaded class, an unloaded class, a movement class, and a rest class.

In another example, the ML model is an RNN that has been trained to input time series 3-axis acceleration data and/or input time series 3-axis angular rate data, and then predict the rest state of the power tool based on the 3-axis acceleration data and/or the 3-axis angular rate data. The ML model may provide a simple binary classification, such as true (or 1) for a rest state, and false (or 0) for any other operational state. When the prediction is true, controller 160 sets the rest time of the power tool to the time period (such as 1 second, etc.). In other words, the power tool was in the rest state during the time window. Conversely, when the prediction is false, controller 160 sets the rest time of the power tool to zero. In other words, the power tool was not in a rest state during the time window.

In certain embodiments, the microcontroller or microprocessor of IMU 168 may execute the ML model, and provide the predicted rest state to controller 160.

Flow may then return to step 930 through "D" (FIG. 9A).

FIG. 9C depicts flow chart 904 illustrating functionality associated with auxiliary wireless device 150 for determining cumulative unloaded operational time, cumulative non-operating movement time and cumulative rest time for a power tool, in accordance with embodiments of the present disclosure.

After controller 160 determines a cumulative loaded operational time of the power tool based on loaded operational times within a cumulative time period (at 930 in FIG. 9A), flow may proceed to step 932 through "E."

At step 932, controller 160 may determine a cumulative unloaded operational time of the power tool based on unloaded operational times within the cumulative time period.

Controller 160 repeats the determination of the unloaded operational time (at 922) for the number of time periods that are within the cumulative time period. Controller 160 then accumulates (sums) the number of unloaded operational times to determine the cumulative unloaded operational time.

At step 934, controller 160 may determine a cumulative non-operating movement time of the power tool based on non-operating movement times within the cumulative time period.

Controller 160 repeats the determination of the non-operating movement time (at 924) for the number of time periods that are within the cumulative time period. Controller 160 then accumulates (sums) the number of non-operating movement times to determine the cumulative non-operating movement time.

At step 936, controller 160 may determine a cumulative rest time of the power tool based on rest times within the cumulative time period.

Controller 160 repeats the determination of the rest time (at 926) for the number of time periods that are within the cumulative time period. Controller 160 then accumulates (sums) the number of rest times to determine the cumulative rest time.

Flow may then return to step 940 through "E" (FIG. 9A).

FIG. 9D depicts flow chart 906 illustrating functionality associated with auxiliary wireless device 150 for sending cumulative unloaded operational time, cumulative non-operating movement time and cumulative rest time for a power tool to a remote device, in accordance with embodiments of the present disclosure.

After controller 160 sends the cumulative loaded operational time to WCU 164 for transmission to a remote device (at 940 in FIG. 9A), flow may proceed to 942 through "F."

At step 942, controller 160 may send the cumulative unloaded operational time to the WCU for transmission to the remote device.

At step 944, controller 160 may send the cumulative non-operating movement time to the WCU for transmission to the remote device.

At step 946, controller 160 may send the cumulative rest time to the WCU for transmission to the remote device.

FIG. 9E depicts flow chart 908 illustrating functionality associated with training an ML model to predict power tool operational states, in accordance with embodiments of the present disclosure.

At step 950, model training system 440 generates ML model training data based on historical IMU sensor data that were acquired for power tools that were operating in various conditions, such as a loaded operational state, an unloaded operational state, a non-operating movement state, and a rest state. More particularly, the historical IMU sensor data for each power tool includes 3-axis acceleration data and 3-axis angular rate data that were acquired when the power tool was operating in each operational condition. A different label is associated with the data acquired during each operational condition to identify the operational state for training purposes.

At 960, model training system 440 trains the ML model to determine power tool operational states based on a training portion of the ML model training data. In certain embodiments, an ML model is trained to predict a single operational state, while in other embodiments, the ML model is trained to predict a class of operational states (such as a loaded class, an unloaded class, a movement class and a rest class).

In certain embodiments, the ML model training data includes a number of data records for each power tool. Each data record may include information associated with a single operational state for the power tool, such as 3-axis acceleration data and 3-axis angular rate data that were acquired during that operational state, a label that identifies that operational state, etc.

At 970, model training system 440 validates the ML model to determine power tool operational states based on a validation portion of the ML model training data that is different than the training portion of the ML model training data. Validating the ML model includes evaluating the performance of the ML model using different training data, and then tuning the ML model parameters to produce the best performance.

In certain embodiments, the ML model may be trained and validated based on historical IMU sensor data for a particular type of power tool. The ML model would then be specific to that particular type of power tool. In other embodiments, the ML model may be trained (and retrained) based on historical IMU sensor data for a number of different types of power tools. The ML model would then be generic with respect to the type of power tool.

FIG. 10 depicts flow chart 1000 illustrating functionality associated with auxiliary wireless device 150 for determining power tool operational parameters, in accordance with embodiments of the present disclosure.

At 1010, IMU 168 outputs IMU sensor data that includes at least one of 3-axis acceleration data or 3-axis angular rate data.

At 1020, controller 160 determines one or more operational parameters of power tool 400 over a time period based on the IMU sensor data. The one or more operational parameters may include the type of power tool, the type of operation being performed by the power tool, the type of output accessory mounted to the power tool, etc. The techniques for determining the one or more operational parameters may include the techniques described above for determining the operational state of the power tool.

Generally, determining the unloaded operational state for power tool 100 (impact wrench) is different than determining the unloaded operational state for power tool 200 (angle grinder), which is different than determining the unloaded operational state for power tool 300 (miter saw). Similarly, determining the loaded operational state for power tool 100 (impact wrench) is different than determining the loaded operational state for power tool 200 (angle grinder), which is different than determining the loaded operational state for power tool 300 (miter saw). Acceleration data may be preferred for identifying impact tools, angular rate data and associated frequencies may be preferred for identifying angle grinders, acceleration and angular rate data may be preferred for identifying miter saws, etc. Accordingly, the type of power tool may be determined by processing the IMU sensor data according to the rule-based techniques described above to determine the best match for the unloaded and loaded operational states.

For example, transforming the 3-axis angular rate data for a power tool operating in an unloaded operational state from the time domain into the frequency domain may identify a sinusoidal waveform that has a frequency associated with the "no load" speed of the power tool. Because the no load speed for the impact wrench (~2,400 rpm), the angle grinder (~7,800 rpm), and the miter saw (~22,000 rpm) are sufficiently distinct, the type of power tool may be identified from the frequency domain data.

In other examples, the 3-axis acceleration data for the loaded impact wrench is significantly higher than the 3-axis acceleration data for the loaded angle grinder and the loaded the miter saw, and may be used to identify the loaded operational state for the impact wrench. Transforming the 3-axis angular rate data from the time domain into the frequency domain may identify a sinusoidal waveform that has a frequency associated with a user-induced rhythmic oscillation (such as a grinding or polishing motion) that may be used to identify the loaded operational state for the angle grinder. A combination of 3-axis acceleration data and 3-axis angular rate data may be used to identify a miter saw when the PAA of at least two axes are greater than 3 g and the 3-axis angular rate data depicts a waveform that has a profile associated with the user-induced transition depicted in FIG. 7G.

At 1030, controller 160 may send the one or more operational parameters to WCU 164 for transmission to a remote device.

In certain embodiments, the IMU sensor data includes at least one of 3-axis acceleration data when the power tool is activated in a loaded condition, 3-axis angular rate data when the power tool is activated in the loaded condition, 3-axis acceleration data when the power tool is activated in an unloaded condition, and 3-axis angular rate data when the power tool is activated in the unloaded condition.

The power tool may be any type of cordless or corded, handheld or stationary power tool, including but not limited to, drills, hammer drills, drivers, impact drivers, impact wrenches, angle grinders, die grinders, straight grinders, polishers, routers, planers, circular saws, miter saws, reciprocating saws, rotary hammers, etc. The type of operation being performed by the power tool may include drilling, driving, impact driving, heavy grinding, light grinding, polishing, removing material, cutting, etc. The type of accessory mounted to the power tool may include a drill bit, a driver bit, a socket, a grinding wheel, a cutting wheel, a saw blade, etc.

In certain embodiments, controller 160 may be configured to identify the type of power tool to which auxiliary wireless device 150 is coupled based on IMU data. For example, the profile and behavior of the data corresponding to the loaded operation of an impact wrench is different from the loaded operation of a grinder and a miter saw. Similarly, the profile and behavior of the data corresponding to the loaded operation of a grinder is different from the loaded operation of a miter saw. For certain tools, the profile and behavior of the data corresponding to the unloaded operation of the power tool may also uniquely identify the tool, or may identify a category to which the tool belongs, such as drills and drivers (including impact wrenches), grinders (including angle grinders), power saws (including miter saws), etc.

More particularly, IMU sensor data plots 500, 505 exhibit unique characteristics for an impact wrench that controller 160 may use to identify impact wrenches from other power tools.

In this example, during loaded operational state 570, the peak absolute value of all axes of the 3-axis acceleration data is greater than 6 g (over a 50 ms window). Filtering and processing the 3-axis acceleration data exposes sinusoidal waveforms with a frequency (56 Hz) that aligns with the impact rate of the impactor assembly (~3,400 rpm). Intermediate, smaller peaks represent hammer rebound of the impactor assembly. During unloaded operational state 560, filtering and processing the 3-axis angular rate data exposes a sinusoidal waveform on (at least) one axis that aligns with the no load speed (~2,400 rpm).

IMU sensor data plots 600, 605 also exhibit unique characteristics for an angle grinder that may be used to identify angle grinders from other power tools, as well as certain output accessories for angle grinders.

In this example, during heavy loaded operational state 670.1, the peak absolute value of at least 2 axes of the acceleration data is greater than 12 g (over a 50 ms window). Filtering and processing the 3-axis acceleration data exposes sinusoidal waveforms with a frequency that aligns with unloaded output shaft speed (~7,800 rpm). The 3-axis angular rate data may include a similar frequency component, and the peak absolute value of at least one axis of the angular rate data exceeds 180 degrees/sec. Additionally, the 3-axis angular rate data exhibits a sinusoidal pattern visible on at least two axes with a second frequency component (4 Hz) that aligns with user-induced movement commonly associated with a heavy grinding operation. Generally, the user-induced movement of an angle grinder (such as rhythmic tool oscillations) may be from 1 Hz to 5 Hz, which may be exhibited by other type of power tools, such as polishers, etc.

In another example, during light loaded operational state 670.2, the peak absolute value of at least 2 axes of the acceleration data is greater than 8 g (over a 50 ms window). Filtering and processing the 3-axis acceleration data exposes sinusoidal waveforms with a frequency that aligns with unloaded output shaft speed (~7,800 rpm). The 3-axis angular rate data may include a similar frequency component, and the peak absolute value of at least one axis of the angular rate data exceeds 160 degrees/sec. Overall, the acceleration data and the angular rate data may include similar frequencies exhibited during the loaded operational state 670.1, but with smaller overall amplitudes. Additionally, the 3-axis angular rate data exhibits a sinusoidal pattern visible on at least two axes with a second frequency component (4 Hz) that aligns with user-induced movement commonly associated with a light grinding operation. Generally, the user-induced movement of an angle grinder (such as rhythmic tool oscillations) may be from 1 Hz to 5 Hz, which may be exhibited by other types of power tools, such as polishers, etc.

In yet another example, during loaded operational state 670.3 (using an alternative grinding disc), the peak absolute value of at least 2 axes of the acceleration data is greater than 4 g but smaller than 8 g (over a 50 ms window). Filtering and processing the 3-axis acceleration data exposes sinusoidal waveforms with a frequency that aligns with unloaded output shaft speed (~7,800 rpm). The 3-axis angular rate data may include a similar frequency component, and the peak absolute value of at least one axis of the angular rate data exceeds 160 degrees/sec. Overall, the acceleration data and the angular rate data may include similar frequencies exhibited during the loaded operational state 670.1, 670.2, but with smaller overall amplitudes. Additionally, the 3-axis angular rate data exhibits a sinusoidal pattern visible on at least two axes with a second frequency component (3 Hz) that aligns with user-induced movement. Generally, the user-induced movement of an angle grinder (such as rhythmic tool oscillations) may be from 1 Hz to 5 Hz, which may be exhibited by other types of power tools, such as polishers, etc.

During unloaded operational state 660, filtering and processing the 3-axis angular rate data exposes a sinusoidal waveform on (at least) one axis that aligns with the no load speed (~7,800 rpm).

IMU sensor data plots 700, 705 also exhibit unique characteristics for a miter saw that may be used to distinguish a miter saw from other power tools.

In one example, during loaded operational state 770.1, the peak absolute value of at least 2 axes of the acceleration data reaches a peak of greater than approximately 3 g (while trigger 311 is engaged). Additionally, the cutting operations exhibit a predictable positive / negative spike pattern in at least one axis of the 3-axis angular rate data. As discussed above, the cutting operation during loaded operational state 770.1 may be divided into zones 770.1A, 770.1B, 770.1C, 770.1D, 770.1E. During zone 770.1A, miter saw 370 positively rotates about pivot axis 374 at a certain rate and the pivoting motion slows down as output accessory 302 (cutting blade) approaches the work piece. This is a transition from the first position to the second position. During zone 770.1B, miter saw 370 positively rotates about pivot axis 374 at a slow rate while material is being cut and removed from the work piece. During zone 770.1C, miter saw 370 positively rotates about pivot axis 374 at a faster rate for a short duration as output accessory 302 briefly over-travels after the cut is complete. During zone 770.1D, miter saw 370 negatively rotates about pivot axis 374 at a certain rate as the user pulls the miter saw towards the second position. During zone 770.1E, miter saw 370 is stationary while trigger 311 is released and the electric motor and output accessory 302 coast down or brake to a stop. The positive / negative spike pattern is exposed in zone 770.1C (positive spike) and zone 770.1D (negative spike).

During active non-cutting operational state 760 (also known as an unloaded operational state), filtering and processing the 3-axis angular rate data exposes a sinusoidal waveform on (at least) one axis that aligns with the no load speed (~22,000 rpm).

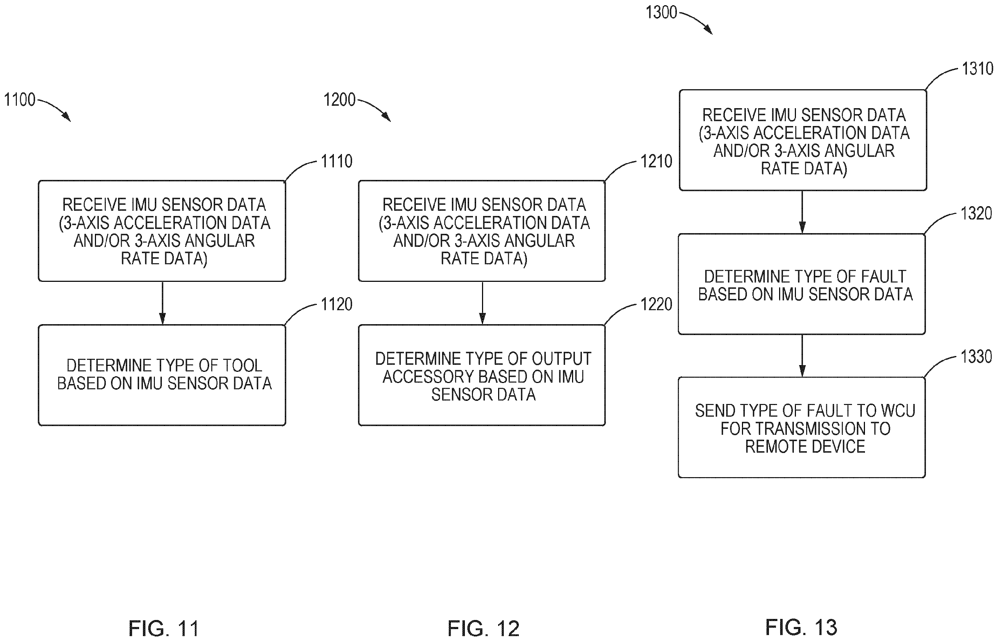

FIG. 11 depicts flow chart 1100 illustrating functionality associated with auxiliary wireless device 150 for determining a type of tool, in accordance with embodiments of the present disclosure.

At 1110, controller 160 receives IMU sensor data including 3-axis acceleration data and 3-axis angular rate data.

At 1120, controller 160 determines a type of tool based on the IMU sensor data. More particularly, controller 160 may process 3-axis acceleration data to determine the peak absolute value of all axes of the 3-axis acceleration data over a particular window of time, and then compare the peak absolute values to various thresholds, such as 3 g, 4 g, 6 g, 8 g, 12 g, etc. Controller 160 may also process the 3-axis angular rate data to identify the peak absolute value of all axes of the 3-axis angular rate data over the particular time window, and then compare the peak absolute values to various thresholds, such as 160 degrees/sec, 180 degrees/sec, etc. Additionally, controller 160 may filter and process the 3-axis angular rate data to identify sinusoidal waveforms and their respective frequencies, and then compare the frequencies to various values, thresholds, ranges, patterns, etc., such as 3 Hz, 4 Hz, 1 to 5 Hz, 56 Hz, 128 Hz, 370 Hz, positive / negative spike patterns, etc. In certain embodiments, controller 160 monitors the IMU sensor data for a predetermined amount of time (such as 10 loaded operation cycles after the initial attachment to a tool) to determine the type of tool to which it is coupled.

In one example, to determine whether the tool type is an impact wrench, controller 160 may compare the peak absolute value of all axes of the 3-axis acceleration data to several thresholds. If the peak absolute value of at least two axes of the acceleration data are less than a first acceleration threshold (e.g., 2 g), then an impact wrench tool type may not be determinable. If the peak absolute value of at least two axes of the acceleration data are greater than the first acceleration threshold (e.g., 2 g) but less than a second acceleration threshold (e.g., 6 g), then controller 160 may compare the processed 3-axis angular rate data to determine whether a sinusoidal waveform is present on at least one axis with a frequency (e.g., 40 Hz) that aligns with an unloaded output shaft speed (e.g., 2,400 rpm). If so, the tool type may be determined to be an impact wrench. If the peak absolute value of at least two axes of the acceleration data are greater than the second acceleration threshold (e.g., 6 g), then controller 160 may inspect the processed 3-axis angular rate data to determine whether a sinusoidal waveform is present on at least one axis with a frequency (e.g., 56 Hz) that aligns with the impact rate of the impactor assembly (e.g., 3,400 rpm). If so, the tool type may be determined to be an impact wrench. Generally, the acceleration threshold may be expressed as a range of acceleration values, such as 2 g to 8 g, the unloaded output shaft speed may be expressed as a range of speeds, such as 1,800 rpm to 3,000 rpm, and the impact rate of the impactor assembly may be expressed as a range of speeds, such as 3,000 rpm to 3,720 rpm.

In another example, to determine whether the tool type is an angle grinder, controller 160 may compare the peak absolute value of all axes of the 3-axis acceleration data to a threshold. If the peak absolute value of at least two axes of the acceleration data are less than a first acceleration threshold (e.g., 4 g), then an angle grinder tool type may not be determinable. If the peak absolute value of at least two axes of the acceleration data are greater than the first acceleration threshold (e.g., 4 g), then controller 160 may compare the peak absolute value of all axes of the 3-axis angular rate data to a threshold. If the peak absolute value of at least one axis of the angular rate data exceeds 160 degrees/sec (or 180 degrees/sec), then controller 160 may analyze the processed 3-axis angular rate data to determine whether a sinusoidal waveform is present on at least one axis with a frequency (e.g., 128 Hz) that aligns with an unloaded output shaft speed (e.g., 7,800 rpm). Additionally, controller 160 may inspect the processed 3-axis angular rate data to determine whether a sinusoidal waveform is present with a low frequency component (e.g., between 1 Hz and 5 Hz, such as 3 Hz, 4 Hz, etc.) that aligns with user-induced movement commonly associated with a grinding operation. If one or more of these conditions are met, the tool type may be determined to be an angle grinder. Generally, the acceleration threshold may be expressed as a range of acceleration values, such as 2 g to 6 g, the angular rate threshold may be expressed as a range of angular rate values, such as 140 degrees/sec to 200 degrees/sec, and the unloaded output shaft speed may be expressed as a range of speeds, such as 7,200 rpm to 8,400 rpm.

In a further example, to determine whether the tool type is a cordless miter saw, controller 160 may compare the peak absolute value of all axes of the 3-axis acceleration data to a threshold. If the peak absolute values of at least two axes of the acceleration data are less than 3 g, then a cordless miter saw tool type may not be determinable. If the peak absolute value of at least two axes of the acceleration data are greater than 3 g, then controller 160 may analyze the processed 3-axis angular rate data to determine whether a sinusoidal waveform is present on at least one axis with a frequency (e.g., 370 Hz) that aligns with an unloaded output shaft speed (e.g., 22,000 rpm). Additionally, controller 160 may inspect the 3-axis angular rate data to determine whether a positive / negative spike pattern is present, for example as depicted in zone 770.1C (positive spike) and zone 770.1D (negative spike) of FIG. 7G. If one or more of these conditions are met, the tool type may be determined to be a cordless miter saw. Generally, the acceleration threshold may be expressed as a range of acceleration values, such as 2 g to 6 g, and the unloaded output shaft speed may be expressed as a range of speeds, such as 21,000 rpm to 23,400 rpm.

FIG. 12 depicts flow chart 1200 illustrating functionality associated with auxiliary wireless device 150 for determining a type of output accessory, in accordance with embodiments of the present disclosure.

Generally, controller 160 may identify the type of output accessory mounted onto the power tool based on IMU sensor data. For example, certain types of angle grinder discs may be identified based on the 3-axis acceleration data and/or 3-axis angular rate data.

At 1210, controller 160 receives IMU sensor data including 3-axis acceleration data and 3-axis angular rate data.

At 1220, controller 160 determines a type of output accessory based on the IMU sensor data. More particularly, controller 160 may process 3-axis acceleration data to determine the peak absolute value of all axes of the 3-axis acceleration data over a particular window of time, and then compare the peak absolute values to various thresholds and ranges, such as 4 g, 8 g, 12 g, 4 g to 8 g, 8 g to 12 g, etc. to determine the type of output accessory. In the examples depicted in FIGS. 6A to 6J, heavy loaded operational state 670.1 and light loaded operational state 670.1 use a grinding disc, while loaded operational state 670.3 uses a flap disc. For these examples, controller 160 may determine the type of output accessory (disc) currently being used by an angle grinder by comparing the peak absolute values to a range, such as 4 g to 8 g, and a threshold, such as 8 g. If the peak absolute values are within the range, then controller 160 may determine that the type of output accessory is a flap disc, and if the peak absolute values are greater than the threshold, then controller 160 may determine that the type of output accessory is a grinding disc.

FIG. 13 depicts flow chart 1300 illustrating functionality associated with auxiliary wireless device 150 for determining a type of fault, in accordance with embodiments of the present disclosure.

At 1310, controller 160 receives IMU sensor data including 3-axis acceleration data and 3-axis angular rate data.

At 1320, controller 160 determines a type of fault based on the IMU sensor data. More particularly, controller 160 may process 3-axis acceleration data to determine the peak absolute value of all axes of the 3-axis acceleration data over a particular window of time, and then compare the peak absolute values to various thresholds and ranges. Controller 160 may also process the 3-axis angular rate data to identify the peak absolute value of all axes of the 3-axis angular rate data over the particular time window, and then compare the peak absolute values to various thresholds.

The type of fault may include a kickback condition, an overcurrent shutdown event, a dropped tool event, etc. For example, controller 160 may identify the kickback condition by determining that the one or more axes of the 3-axis angular rate data includes a rapid spike. For another example, controller 160 may identify the overcurrent shutdown event by determining that one or more axes of the 3-axis angular rate data exceed a high limit followed by a sudden tool shutdown (indicated by a rapid reduction in acceleration levels). For a further example, controller 160 may identify the dropped tool event by determining that the one or more axes of the 3-axis acceleration data includes a rapid spike.

At 1320, controller 160 sends the type of fault to WCU 164 for transmission to remote device.

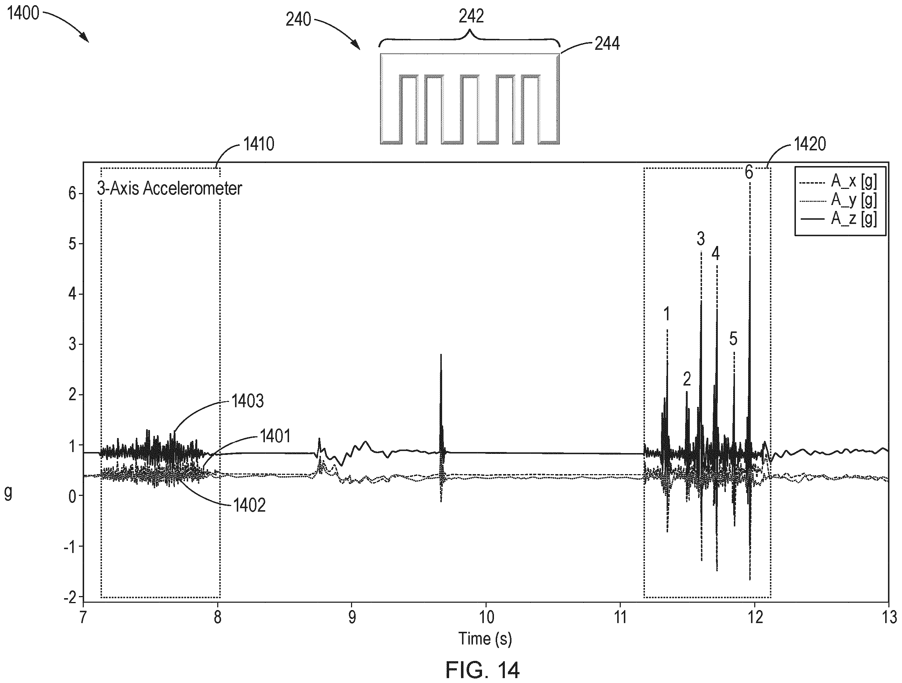

FIG. 14 depicts IMU sensor data plot 1400 for auxiliary wireless device 150, in accordance with embodiments of the present disclosure.

In certain embodiments, pocket 240 may include identification structure 242 with a number of features 244, such as parallel, non-uniformly-spaced slots (as depicted in FIG. 14), bumps, rumble strips, Braille-like features, etc. The insertion of auxiliary wireless device 150 into pocket 240 would cause auxiliary wireless device 150 to slide over identification structure 242 to generate a unique acceleration signature. IMU 168 would output the associated 3-axis acceleration data to controller 160, which would process the acceleration signature to determine the type of power tool associated with identification structure 242.

More particularly, the characteristics of features 244 may be associated with the type of power tool, such as the number of features 244, the depth of features 244, the spacing between features 244, the alignment of features 244, etc. In certain embodiments, the features 244 may have at least two depths, and each slot depth would produce a different peak acceleration. In other embodiments, the spacing between features 244 may be non-uniform or features 244 may be non-parallel (aligned on multiple axes).

IMU sensor data plot 1400 presents 3-axis acceleration data (g) over time (about 6 seconds) including 1^{st} axis acceleration data 1401, 2^{nd} axis acceleration data 1402, and 3^{rd} axis acceleration data 1403.

During first time period 1410, auxiliary wireless device 150 is sliding over a smooth portion of pocket 240 during the initial insertion. During second time period 1420, auxiliary wireless device 150 is sliding over identification structure 242 of pocket 240 to generate a unique 3-axis acceleration signature having 6 acceleration peaks (numbered 1 to 6). Acceleration peaks 1, 3, 4, and 6 are associated with deeper, multi-layered slots, while acceleration peaks 2 and 5 are associated with narrower, single layer slots.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An auxiliary wireless device, comprising:
a body removably attachable to a housing of a power tool;
a wireless communication unit (WCU), supported by the body, the WCU including a wireless transceiver;
an inertial measurement unit (IMU), supported by the body, the IMU configured to output IMU sensor data including at least one of 3-axis acceleration data and 3-axis angular rate data; and
a controller, in communication with the WCU and the IMU, the controller configured to: determine a loaded operational time of the power tool over a time period based on the IMU sensor data, determine a cumulative loaded operational time of the power tool based on loaded operational times within a cumulative time period, and send the cumulative loaded operational time to the WCU for transmission to a remote device;
wherein the power tool is activated in a loaded condition during the loaded operational time.

2. The auxiliary wireless device of claim 1, wherein determine the loaded operational time includes:
determine, based on the 3-axis acceleration data, a peak absolute acceleration (PAA) for each axis over the time period;
compare the PAA for each axis to a first acceleration threshold; and
set the loaded operational time of the power tool to the time period when the PAA for at least two axes are greater than the first acceleration threshold.

3. The auxiliary wireless device of claim 2, wherein:
the controller is further configured to:
determine an unloaded operational time of the power tool over the time period, including: compare the PAA for each axis to a second acceleration threshold that is less than the first acceleration threshold, and set an unloaded operational time of the power tool to the time period when the PAA for at least two axes are less than the first acceleration threshold and greater than the second acceleration threshold;
determine a cumulative unloaded operational time of the power tool based on unloaded operational times within the cumulative time period; and
send the cumulative unloaded operational time to the WCU for transmission to the remote device; and wherein the power tool is activated in an unloaded condition during the unloaded operational time.

4. The auxiliary wireless device of claim 3, wherein:
the controller is further configured to:
determine a non-operating movement time of the power tool over the time period, including: compare the PAA for each axis to a third acceleration threshold that is less than the second acceleration threshold, and set a movement time of the power tool to the time period when the PAA for at least one axis is less than the second acceleration threshold and greater than the third acceleration threshold, determine a cumulative non-operating movement time of the power tool based on non-operating movement times within the cumulative time period, and send the cumulative non-operating movement time to the WCU for transmission to the remote device;
and wherein the power tool is not activated or is activated in the unloaded condition during the non-operating movement times.

5. The auxiliary wireless device of claim 4, wherein:
the controller is further configured to:
determine a rest time of the power tool over the time period, including set a rest time of the power tool to the time period when the PAA for each axis are less than the third acceleration threshold; determine a cumulative rest time of the power tool based on rest times within the cumulative time period; and
send the cumulative rest time to the WCU for transmission to the remote device;
and wherein the power tool is not activated during the rest times.

6. The auxiliary wireless device of any preceding claim, wherein:
determine the loaded operational time of the power tool includes: determine, based on 3-axis angular rate data, a peak absolute angular rate (PAAR) for each axis over the time period, compare the PAAR for each axis to an angular rate threshold, and set the loaded operational time of the power tool to the time period when the PAAR for at least one axis is greater than the angular rate threshold and the 3-axis angular rate data for at least one axis is sinusoidal with an angular rate frequency; and
wherein the angular rate frequency is related to user-induced movement of the power tool.

7. The auxiliary wireless device of claim 6, wherein:
the controller is further configured to:
determine an unloaded operational time of the power tool over the time period, including: set an unloaded operational time of the power tool to the time period when the PAAR for at least one axis is greater than the angular rate threshold and the 3-axis angular rate data for at least one axis is sinusoidal with a second angular rate frequency, determine a cumulative unloaded operational time of the power tool based on unloaded operational times within the cumulative time period, send the cumulative unloaded operational time to the WCU for transmission to the remote device; and
wherein the power tool is activated in an unloaded condition during the unloaded operational time, and the second angular rate frequency is related to a speed of the power tool.

8. The auxiliary wireless device of any preceding claim, wherein the controller is further configured to: store, in a memory, the IMU sensor data as timestamped IMU sensor data; and send the timestamped IMU sensor data to the WCU for communication over a wireless communication link.

9. The auxiliary wireless device of claim 8, wherein the controller is further configured to: determine, based on the timestamped IMU sensor data, at least one timestamped tool operational event including at least one of a total operational time, a high loaded operational time, a low loaded operational time, a trigger press time, a trigger release time, and an idle time; and send the timestamped tool operational events to the WCU for transmission to the remote device.

10. The auxiliary wireless device of any preceding claim, wherein the power tool is a drill, a driver, an impact driver, an impact wrench, a grinder, a miter saw, or a rotary hammer.

11. The auxiliary wireless device of any preceding claim, wherein the controller is configured to execute a machine learning (ML) model to determine the loaded operational time of the power tool over the time period based on the IMU sensor data.

12. The auxiliary wireless device of claim 11, wherein the ML model is trained to determine the loaded operational time of the power tool based on historical IMU sensor data that include one or more power tools operating in the loaded condition.

13. The auxiliary wireless device of claim 12, wherein the ML model is trained to determine an unloaded operational time of the power tool based on historical IMU sensor data that include one or more power tools operating in an unloaded condition; and
the controller is further configured to execute the ML model to determine an unloaded operational time of the power tool over the time period based on the IMU sensor data, determine a cumulative unloaded operational time of the power tool based on unloaded operational times within the cumulative time period, and send the cumulative unloaded operational time to the WCU for transmission to the remote device;
wherein the power tool is activated in the unloaded condition during the unloaded operational time.

14. The auxiliary wireless device of claim 13, wherein the ML model is trained to determine a movement time of the power tool based on historical IMU sensor data that include one or more power tools that are not activated or activated in the unloaded condition; and
the controller is further configured to execute the ML model to determine a non-operating movement time of the power tool over the time period based on the IMU sensor data, determine a cumulative non-operating movement time of the power tool based on non-operating movement times within the cumulative time period, and send the cumulative non-operating movement time to the WCU for transmission to the remote device;
wherein the power tool is not activated or is activated in the unloaded condition during the non-operating movement time.

15. The auxiliary wireless device of claim 14, wherein:
the ML model is trained to determine a rest time of the power tool based on the historical IMU sensor data that include one or more power tools that are not activated; and the controller is further configured to execute the ML model to determine a rest time of the power tool over the time period based on the IMU sensor data, determine a cumulative rest time of the power tool based on rest times within the cumulative time period, and send the cumulative rest time to the WCU for transmission to the remote device;
wherein the power tool is not activated during the rest time.
